# FASCICULE DE BREVET EUROPEEN

(11) **EP 2 132 268 B1**
(45) Date de publication et mention de la délivrance du brevet: **22.12.2010**
(21) Numéro de dépôt: 08719233.2
(22) Date de dépôt: 05.03.2008
(51) Int. Cl.: C09C 3/10, C09C 1/02, C09C 3/04, C08K 9/04, C08F 290/14

(54) **PROCEDE DE BROYAGE A SEC D'UN OU PLUSIEURS MATERIAUX MINERAUX COMPRENANT AU MOINS UN CARBONATE DE CALCIUM**
VERFAHREN ZUM TROCKENMAHLEN MINDESTENS EINES AUS MINDESTENS EINEM CALCIUMCARBONAT BESTEHENDEN MINERALSTOFFS
METHOD FOR DRY-GRINDING ONE OR MORE MINERAL MATERIALS CONSISTING OF AT LEAST ONE CALCIUM CARBONATE

(30) Priorité: 05.03.2007 FR 0701591
(43) Date de publication de la demande: 16.12.2009
(73) Titulaire: Omya Development AG, 4665 Oftringen (CH)
(72) Inventeur: BURI, Matthias, CH-4852 Rothrist (CH); GANE, Patrick, A.C., CH-4852 Rothrist (CH); BLUM, Rene, Vinzenz, CH-4915 St Urban (CH)
(74) Mandataire: Richebourg, Michel François
(86) Numéro de dépôt international: PCT/IB2008/000513
(87) Numéro de publication internationale: WO 2008/107780

(56) Documents cités:
- EP-A- 1 201 624
- EP-A2- 0 296 610
- WO-A-2004/044022
- FR-A1- 2 655 875

## Description

Un premier objet de la présente invention est un procédé de broyage à sec d'un ou plusieurs matériaux minéraux qui comprennent au moins un carbonate de calcium, caractérisé en ce que ledit procédé comprend les étapes de :
a) concasser le ou les matériaux minéraux dans au moins une unité de concassage jusqu'à l'obtention d'un matériau concassé avec un d₉₅ inférieur à 10 cm ;
b) éventuellement bonifier tout ou une partie du matériau concassé selon l'étape a) ;
c) broyer à sec le matériau concassé selon l'étape a) et / ou b) dans au moins une unité de broyage :
   (i) en présence d'au moins un polymère hydrophile de type peigne contenant au moins une fonction oxyde de polyalkylène greffée sur au moins un monomère à insaturation éthylénique,
   (ii) de telle manière à ce que la quantité de liquide dans ladite unité de broyage est inférieure à 15 % en poids sec dudit matériau concassé dans ladite unité de broyage ;
d) éventuellement classifier le matériau broyé à sec selon l'étape c) avec au moins une unité de classification ;
e) éventuellement répéter les étapes c) et / ou d) sur tout ou une partie du matériau broyé à sec issu de l'étape c) et / ou d);
et caractérisé en ce que le matériau récupéré suite à l'étape c) et / ou d) et / ou e) a un d₅₀ (diamètre moyen) de 0,5 à 500 microns.

Un autre objet de la présente invention est un produit issu des étapes c) et / ou d) et / ou e) du procédé selon l'invention.

Un autre objet de la présente invention est l'utilisation du produit issu des étapes c) et / ou d) et / ou e) du procédé selon l'invention, dans un procédé de broyage en voie humide, ledit broyage humide pouvant avoir lieu en présence éventuelle d'agents dispersants, afin d'obtenir un produit broyé avec un d₅₀ (diamètre moyen) de 0,4 à 1,0 microns, et préférentiellement afin d'obtenir un produit broyé avec un d₅₀ (diamètre moyen) de 0,6 à 0,9 microns.

Dans l'ensemble de la présente Demande, le terme polymère « hydrophile » désigne un polymère hydrosoluble ou émulsifié dans un excès d'eau sous la force d'une faible agitation.

Dans l'ensemble de la présente Demande, l'expression polymère « de type peigne » désigne un polymère constitué d'un squelette de base essentiellement linéaire, sur lequel sont greffés au moins 3 segments latéraux macromoléculaires, le terme macromoléculaire désignant une molécule de poids moléculaire pondéral (Mw) supérieur à 500 g/mole, parmi lesquelles au moins un segment latéral est constitué d'une fonction oxyde de polyalkylène greffée sur un monomère à insaturation éthylénique. Ce ou ces polymère(s) « de type peigne » peuvent être des homopolymères et / ou des copolymères et / ou des polymères d'ordre supérieur.

Lesdits segments latéraux sont introduits dans le polymère par polymérisation, éventuellement entre autre, de monomère macromoléculaire, c'est-à-dire de monomère de poids moléculaire supérieur à 500 g/mole, via une fonction éthylénique insaturée située en une des positions terminales dudit monomère.

En ce qui concerne la présente invention, tous les poids moléculaires (Mw) correspondent au poids moléculaire moyen pondéral déterminé selon la méthode explicitée ci-dessous, par Chromatographie d'Exclusion Stérique (CES).

1 ml de la solution de polymère est mise sur une coupelle, qui est ensuite évaporée à température ambiante sous vide de pompe à palettes. Le soluté est repris par 1 ml de l'éluant de la CES, et l'ensemble est ensuite injecté dans l'appareil de CES. L'éluant de la CES est une solution aqueuse de NaHCO₃: 0,05 mol/l, NaNO₃ : 0,1 mol/l, triéthylamine 0,02 mol/l, NaN₃ 0,03 % massique. La chaîne de CES contient une pompe isocratique (Waters™ 515) dont le débit est réglé à 0,5 ml/min, un four contenant une pré colonne de type "Guard Column Ultrahydrogel Waters™", une colonne linéaire de 7,8 mm de diamètre interne et 30 cm de longueur de type "Ultrahydrogel Waters™" et un détecteur réfractométrique de type RI Waters™ 410. Le four est porté à la température de 60°C et le réfractomètre à 50°C. Le logiciel de détection et de traitement du chromatogramme est le logiciel SECential, fourni par "L.M.O.P.S. CNRS, Chemin du Canal, Vemaison, 69277".

Dans le cas des polymères hydrophile de type peigne selon l'invention, la CES est étalonnée par une série de 5 étalons de poly(acrylate) de sodium fourni par Polymer Standards Service™. Dans le cas des agents de broyage EG, PEG et MPG, la CES est étalonnée par une série de polyéthylènes glycols DIN standards disponibles auprès de la société Polymer Standards Service GmbH à Mayence, Allemagne, sous les noms : PSS-dpeg400, PSS-dpeg600, PSS-dpeg1k, PSS-dpeg1.5k, PSS-dpeg2k, PSS-dpeg3k, PSS-dpeg4k, PSS-dpeg6k et PSS-dpeg10k.

Finalement, dans l'ensemble de la présente Demande, la valeur de « dₓ » est la valeur pour laquelle X % en poids des particules ont un diamètre inférieur à cette valeur, telle que déterminé à partir de mesures effectuées avec un granulomètre Malvern™ Mastersizer™ S version 2.8 pour les tailles de particule inférieure à 100 microns et par tamisage pour les tailles de particule supérieur à 100 microns.

Les additifs, introduits pendant l'étape de broyage de matériaux minéraux, sont utilisés pour faciliter le procédé de broyage, pour assister au processus de réduction de tailles des particules, et pour augmenter la capacité et l'efficacité du procédé de broyage. De tels additifs sont connus comme des agents d'aide au broyage.

Par opposition aux agents d'aide au broyage utilisables pour le broyage de matériaux minéraux dans un environnement humide, mettant en oeuvre une teneur en liquide supérieur à 15 % en poids par rapport au poids sec de matériaux minéraux à broyer, ce liquide étant habituellement composé majoritairement d'eau, les agents d'aide au broyage utilisables pour le broyage de tels matériaux en milieu sec sont sujets à des énergies d'adsorption et de désorption de surface différentes de celles relatives aux agents de broyage utilisables en milieu humide. De plus, et parmi encore d'autres différences, ces agents de broyage à sec sont tout particulièrement destinés à être mis en oeuvre dans un environnement éventuellement hydrophobe, tel que l'air, par opposition à un environnement hydrophile où sont généralement mis en oeuvre les agents de broyage en milieu humide.

Le broyage à sec est généralement réalisé dans un broyeur et résulte d'une opération de broyage autogène, où les particules à broyer subissent des impacts les unes contre les autres, ou résultent d'impacts additionnels avec un ou plusieurs autres matériaux, tels que des billes de broyage, des barres de broyage ou des broches de broyage. Un tel broyage peut avoir lieu, par exemple, dans un broyeur à boulet, à vibration ou à roue. En fonction du type de broyage, ledit broyage peut avoir lieu dans une chambre de broyage stationnaire ou rotative. Les agents de broyage à sec peuvent être ajoutés à l'alimentation et / ou dans la chambre de broyage et / ou au cours du procédé de broyage.

On peut trouver une discussion générale sur les agents de broyage à sec et leur rôle durant le procédé de broyage dans "Beitrag zur Aufklärung der Wirkungsweise von Mahlhilfsmitteln" par K. Graichen et al. publié dans "Freiberger Forschungshefte" VEB Deutscher Verlag für Grundstoffindustrie, Leipzig, Germany (1975). Il existe un autre article général sur le broyage à sec du carbonate de calcium : "Calcium Carbonate" by F.W. Tegethoff (Birkhäuser Verlag, 2001).

De manière générale, les agents de broyage à sec peuvent être classés dans l'une des 3 catégories suivantes.

Le premier groupe d'agents d'aide au broyage à sec de matériaux minéraux qui comprennent un carbonate de calcium est composé traditionnellement des acides faibles de Brônstedt, tels que les acides formique, acétique, lactique, lignitique, adipique, lactique, ou les acides gras, et en particulier les acides palmitique, stéarique, et lignine sulfonique, ou les sels des acides faibles de Brônstedt, tels que les sels de sodium, et notamment le lignine sulfonate de sodium ou l'acétate de sodium.

Dans ce contexte, le document FR 2 863 914 décrit l'utilisation d'acide adipique durant le broyage à sec d'un matériau minéral, en vue d'éviter la ré-agglomération ultérieure du matériau broyé ou la formation de poussière durant le broyage. Toutefois, un tel acide limite l'utilisation du matériau broyé dans des produits nécessitant une résistivité électrique élevée, tels que les câbles de polymère souple, notamment formé de polyéthylène ou de PVC. De tels additifs sont aussi utilisés pour augmenter de manière spécifique l'efficacité du broyage.

A cette fin, le document FR 2 203 670 décrit un agent de dispersion pour le broyage à sec sous la forme d'esters aliphatiques comme les acétates aliphatiques présentant l'inconvénient d'être facilement volatilisés lors de l'application des produits broyés.

Les sels de lignine sulfonâtes, couramment mis en oeuvre dans l'industrie cimentaire, présentent le désavantage de décroître la résistivité de polymère chargé de matériaux broyé à sec par cette agent, conséquence non souhaitable dans le domaine des câbles souples.

Enfin, le document WO 98/21158 décrit une méthode pour le broyage à sec de kaolins calcinés par mise en oeuvre d'un polyacrylate d'ammonium comme agent d'aide au broyage à sec et ce, en vue d'améliorer la coulabilité du produit broyé, l'efficacité du broyage, ainsi que les propriétés rhéologiques du produit final dans lequel sont mis en oeuvre les produits broyés à sec selon cette invention.

Un deuxième groupe d'agents d'aide au broyage à sec est constitué par les bases faibles de Brönstedt ; ce groupe inclut notamment les amines.

Illustrant les deux groupes précédents, l'homme du métier connaît le document EP 0 510 890, qui décrit un dispositif pour le broyage de matériaux particulaires solides, et plus particulièrement de matériaux inorganiques, qui peuvent être à base de carbonate, sensiblement à l'état sec, de même qu'un procédé de broyage par attrition de tels matériaux dans le but de répartir de manière uniforme l'additif d'aide au broyage sur le matériau inorganique. L'agent de traitement peut être un acide gras, et notamment l'acide stéarique qui est exemplifié, une amine ou un ammonium quaternaire ayant au moins un groupement alkyle ou un silane substitué. Par contre, il est à noter qu'une grande majorité des ammoniums quaternaires sont connus pour influencer et notamment pour réduire la stabilité thermique du PVC.

En outre, de tels additifs sont bien connus pour leur capacité à minimiser la formation d'agrégats de matériaux broyés au cours ou après le procédé de broyage à sec.

Le document GB 2 179 268 décrit un procédé de broyage d'un matériau, pouvant inclure un carbonate, sensiblement à l'état sec. Les additifs introduits durant ce procédé en vue de minimiser la formation d'agrégats comprennent des additifs de chaîne courte et/ou hydrophobe, notamment les acides gras, tels que l'acide stéarique (qui est aussi exemplifié), et des sels d'acides gras tels que des agents de surface de nature cationique, tels que des amines, et tout particulièrement des diamines (l'alkyl propylène diamine étant exemplifié), et des silanes. Des alkyls et des alkyls phényls éthoxylés sont aussi décrits, et particulièrement l'octyl phenoxy polyethoxyethyl benzyl éther. Les esters de phosphates, les sels mono- ou di-alcali métalliques d'un copolymère de l'anhydride maléique et le di-isobutylène sont aussi mentionnés. Enfin, les suphosuccinates sont aussi décrits comme utilisables dans le procédé selon ce document.

Au regard des deux groupes d'agents d'aide au broyage à sec précédemment mentionnés, le document FR 2 863 914 révèle un net inconvénient relatif à l'acide stéarique : il ne permet pas d'obtenir des particules broyées d'un diamètre inférieur à 25 µm. De plus, il est connu par l'homme du métier que de tels acides gras ont une influence importante sur la tension superficielle d'une particule, le rendant hydrophobe.

En ce qui concerne les amines et les sels d'amines, il a été noté qu'outre le fait qu'ils modifient la résistivité électrique du produit final dans lequel on retrouve le matériau broyé à sec, de tels agents d'aide au broyage à sec peuvent se comporter comme des agents complexant au niveau des applications finales dans lesquelles ils peuvent être employés, et notamment par rapport aux composés à base de cobalt employés pendant la fabrication de polyesters, qui rendent difficile le contrôle de la réactivité dudit polyester. De plus, dans le cas des amines primaires et secondaires, on peut observer la formation d'amines azotées.

Les bases de Lewis constituent le troisième groupe d'agents d'aide au broyage à sec, et contiennent notamment les alcools. De tels alcools sont notamment les éthylènes glycols, diéthylène glycols, triéthylène glycols, propylène glycols et dipropylène glycols. Par exemple, les documents WO 2002/081 573 et US 2003/019399 décrivent l'utilisation de diéthylène glycol comme agent d'aide au broyage à sec dans le tableau 1 de chacun de ces documents.

Le document WO 2005/071 003 décrit un coeur de carbonate de calcium au moins partiellement recouvert par une couche ajoutée au moyen de deux étapes consécutives distinctes de traitement, chaque étape mettant en oeuvre un traitement différent. L'objectif de cette invention est de fournir des particules de carbonate de calcium ayant une dispersibilité améliorée et une tendance à l'agglomération réduite. Cette invention fait référence de manière générale à un alcool polyhydrique, correspondant à l'éthylène glycol, qui constitue le premier et / ou le second agent de traitement.

Certains de ces additifs sont ajoutés en vue d'améliorer la compatibilité des matériaux broyés dans l'application finale.

A cette fin, l'homme du métier connaît le document WO 2005/026 252 qui décrit une charge modifiée en surface comprenant des charges particulaires, qui peuvent, parmi d'autres alternatives, être du carbonate de calcium, où les surfaces de cette charge sont modifiées avec une pluralité de groupement hydroxyles. De telles charges sont rendues compatibles et dispersables dans des résines polymériques. Dans le cas où ladite charge est un carbonate de calcium naturel, le document indique que ledit carbonate de calcium naturel est préférentiellement modifié par broyage à sec en l'absence d'espèces chimiques hygroscopiques ou hydrophiles. L'agent d'aide au broyage à sec peut être une triéthanolamine, un polypropylène glycol ou un éthylène glycol.

En fait, les agents d'aide au broyage du type mono- ou pluri glycol, de poids moléculaire généralement inférieur à 300 g/mole, sont fréquemment utilisés dans l'industrie et présentent de nombreux avantages parmi lesquels leur faible coût.

Cependant, au sujet de ce type d'agents d'aide au broyage, il a été remarqué que les produits broyés par de tels agents présentent une quantité de composés organiques volatiles (COV) relativement élevé, ne prenant ainsi pas en compte les obligations relatives à la pollution de l'environnement.

L'homme du métier doit donc faire face au problème suivant : diminuer la taille des particules d'un ou plusieurs matériaux minéraux qui comprennent chacune au moins un carbonate de calcium par un procédé de broyage à sec permettant d'obtenir une particule présentant un diamètre moyen recherché dans la plupart des domaines d'application d'une telle particule, et notamment afin d'obtenir un matériau broyé avec un d₅₀ (diamètre moyen) de 0,5 à 500 microns, sans introduire une quantité de composés organiques volatiles (COV) élevé dans le produit broyé.

De plus, cette solution ne doit par avoir recours à des quantités d'agent d'aide au broyage qui pourraient altérer substantiellement les propriétés du matériau broyé, de même que les propriétés du produit final contenant ledit matériau broyé.

En réponse à ces questions, la Demanderesse a mis au point un procédé qui résout de manière surprenante l'ensemble des problèmes mentionnés plus haut.

Il s'agit d'un procédé de broyage à sec d'un ou plusieurs matériaux minéraux qui comprennent au moins un carbonate de calcium, caractérisé en ce que ledit procédé comprend les étapes de :
a) concasser le ou les matériaux minéraux dans au moins une unité de concassage jusqu'à l'obtention d'un matériau concassé avec un d₉₅ inférieur à 10 cm ;
b) éventuellement bonifier tout ou une partie du matériau concassé selon l'étape a) ;
c) broyer à sec le matériau concassé selon l'étape a) et / ou b) dans au moins une unité de broyage :
   (i) en présence d'au moins un polymère hydrophile de type peigne contenant au moins une fonction oxyde de polyalkylène greffée sur au moins un monomère à insaturation éthylénique,
   (ii) de telle manière à ce que la quantité de liquide dans ladite unité de broyage est inférieure à 15 % en poids sec dudit matériau concassé dans ladite unité de broyage ;
d) éventuellement classifier le matériau broyé à sec selon l'étape c) avec au moins une unité de classification ;
e) éventuellement répéter les étapes c) et / ou d) sur tout ou une partie du matériau broyé à sec issu de l'étape c) et / ou d);
et caractérisé en ce que le matériau récupéré suite à l'étape c) et / ou d) et / ou e) a un d₅₀ (diamètre moyen) de 0,5 à 500 microns.

Ainsi, la Demanderesse peut citer le document EP 0 610 534 qui enseigne la préparation de polymères obtenus par copolymérisation d'un monomère isocyanate et de monomères aprotiques, puis par fonctionnalisation au moyen d'amines ou d'éthers monoalkylés de polyalkylènes glycol. De tels agents sont particulièrement efficaces pour le broyage aqueux de pigments organiques.

De même, elle indique que le document WO 00 / 077 058 décrit des polymères à base d'un dérivé insaturé d'un acide mono ou dicarboxylique, d'un dérivé insaturé à structure peigne, d'un composé polysiloxane insaturé ou d'un ester insaturé. Ces copolymères sont utilisés comme agents dispersants dans les suspensions aqueuses de charges minérales, notamment dans le secteur des ciments.

Le document WO 91 / 09067 décrit des agents amphotère hydrosoluble à base de monomères éthylénique à fonction carboxylique, de monomères éthylénique non ionique et de monomères éthylénique cationique dont le groupement cationique est éloigné de la chaîne éthylénique au moyen de groupes oxyalkylés et porteur d'au moins deux radicaux alkyles. Ces agents sont utilisés, entre autre, lors du broyage en phase aqueuse de pigments et / ou de charges minérales.

Elle connaît également le document WO 01 / 096 007 qui décrit un copolymère ionique, hydrosoluble, et disposant d'une fonction greffée alkoxy ou hydroxy à structure peigne, dont le rôle est de disperser et / ou d'aider au broyage des pigments et / ou des charges minérales en milieu aqueux. Ledit copolymère permet d'obtenir des suspensions aqueuses de ces dites matières affinées, de concentration en matière sèche pouvant être élevée, de viscosité Brookfield™ faible et stable dans le temps ayant la propriété de présenter une surface pigmentaire dont la charge ionique déterminée par titration est faible : il s'agit donc d'un problème technique différent de celui que vise à résoudre la présente invention.

Elle connaît également le document WO 2004 / 041 883 qui enseigne l'utilisation d'un copolymère hydrosoluble et de préférence faiblement ionique et hydrosoluble, disposant d'au moins une fonction alkoxy ou hydroxy à structure peigne greffée sur au moins un monomère insaturé éthylénique, comme agent améliorant la brillance du produit final tel qu'une feuille de papier ou une matière plastique.

Il apparaît à travers la lecture de ce document que ledit copolymère peut être utilisé dans un procédé qui peut, entre autre, être un procédé de broyage en milieu aqueux (exemples 1, 2, 6), et que c'est la dispersion ou la suspension résultante qui apporte une brillance améliorée au produit final (peinture ou feuille de papier couchée dans les exemples 1, 2, 3, 4, 6 et 7). Ledit copolymère peut aussi être utilisé comme additif direct, mais en milieu aqueux, dans le cas de la formulation d'une sauce de couchage papetière, ladite sauce apportant par la suite une brillance améliorée à la feuille de papier couchée (exemple 5). Le problème technique résolu par ce document est donc très différent de celui qui fait l'objet de la présente Demande.

La Demanderesse connaît aussi le document WO 2004 / 044 022 qui décrit l'utilisation d'un copolymère hydrosoluble disposant d'au moins une fonction alkoxy ou hydroxy à structure peigne greffée sur au moins un monomère insaturé éthylénique, comme agent améliorant l'activation de l'azurage optique dans les domaines du papier, du textile, de la détergence et de la peinture. Il est à noter que l'activation de l'azurage optique est une propriété très éloignée de celles qui font l'objet de la présente Demande.

La Demanderesse connaît aussi la demande de brevet non publié FR 05 11274, qui concerne tout d'abord un procédé de fabrication d'une résine thermoplastique chargée par une matière minérale ou carbonée, et contenant éventuellement un modificateur d'impact de nature organique, par introduction dans ladite résine d'un polymère peigne disposant d'au moins un monomère à insaturation éthylénique sur lequel est greffée au moins une fonction oxyde de polyalkylène. Cette demande de brevet ne fait pas référence a de broyage à sec d'un ou plusieurs matériaux minéraux qui comprennent au moins un carbonate de calcium, caractérisé en ce que ledit procédé comprend les multiples étapes de la présente invention. Même, l'essai n° 16 de cette demande de brevet ne met en oeuvre un polymère selon cette demande de brevet que suite à une étape de broyage a sec avec un monopropylène glycole.

Finalement, la Demanderesse connaît aussi demande de brevet non publiée FR 06 09535, qui concerne tout d'abord l'utilisation comme agent compatibilisant, dans un procédé de fabrication d'une résine thermoplastique chlorée chargée par une matière minérale, d'un polymère peigne disposant d'au moins un monomère anionique à insaturation éthylénique sur lequel est greffée au moins une fonction oxyde de polyalkylène. Cette demande de brevet ne fait pas référence à de broyage à sec d'un ou plusieurs matériaux minéraux qui comprennent au moins un carbonate de calcium, caractérisé en ce que ledit procédé comprend les multiples étapes de la présente invention.

Ainsi, aucun de ces documents de l'art antérieur ne concerne le problème suivant que doit résoudre l'homme du métier : réaliser le broyage et la division d'un ou plusieurs matériaux minéraux qui comprennent chacun au moins un carbonate de calcium à travers un procédé de broyage à sec et ce, sans conduire à un produit ayant une quantité de composés organiques volatiles (COV) trop importante.

Plus particulièrement, aucun des documents de l'art antérieur ne décrit ni n'enseigne la résolution de ce problème, en combinaison avec les autres exigences de l'homme du métier, à savoir :
- fournir un procédé de broyage efficace (en terme de capacité de production et d'énergie de broyage requise) d'un ou plusieurs matériaux minéraux qui comprennent chacun au moins un carbonate de calcium conduisant à un diamètre moyen recherché dans la plupart des diverses domaines d'application de tels matériaux broyés (de 0,5 à 500 microns), et ce, particulièrement par rapport aux solutions de l'art antérieur,
- éviter d'avoir recours à des quantités d'agents d'aide au broyage qui pourraient altérer les propriétés du produit final, afin de réaliser un broyage efficace,
- éviter d'avoir recours à un agent d'aide au broyage qui se comporte comme un complexant pendant la fabrication des polyesters, rendant de ce fait difficile le contrôle de la vitesse de réaction,
- fournir un agent d'aide au broyage qui conduira à une quantité réduite de composés organiques volatiles (COV) dans le produit broyé et ce, pour prendre en compte les obligations relatives à la pollution de l'environement.

Au regard de cette dernière exigence, il faut noter que même avec de faibles pressions de vapeur de l'ordre de 10⁻² mm de Hg et avec des points d'ébullition de l'ordre de 250 °C ou plus, la plupart des glycols utilisés dans l'art antérieur comme agents d'aide au broyage à sec peuvent s'évaporer entièrement, même à des faibles températures de l'ordre de 45 °C et ce, pendant une période de 16 heures environ.

Notamment, il sera important de fournir un agent d'aide au broyage qui ne conduit pas à la formation d'azéotrope en combinaison avec les solvants aqueux et/ou alcool et/ou organique, milieux dans lesquels pourraient se trouver le produit broyé, les azéotropes présentant un risque augmenté de contamination de l'environnement.

La Demanderesse tient à indiquer qu'elle connaît la demande de brevet non publiée FR 06 04690 qui traite un problème similaire au problème résolu par la présente invention. La solution de la demande de brevet non publiée FR 06 04690 concerne un procédé de broyage à sec d'un matériau contenant un minerai carbonaté, caractérisé en ce que ledit procédé comprend, entre autre, une étape de broyage à sec de ce matériau en présence d'au moins un polymère polyalkylène glycol où 90 % au moins des unités monomères formant le squelette dudit polymère sont constitués d'oxyde d'éthylène, d'oxyde de propylène, ou leurs mélanges, et dont le poids moléculaire est au moins égal à 400 g/mole. Cette demande de brevet ne fait aucune référence à l'utilisation de polymère hydrophobe de type peigne comme agent d'aide au broyage à sec.

Comme indiqué auparavant, un premier objet de la présente invention consiste en un procédé de broyage à sec d'un ou plusieurs matériaux minéraux qui comprennent au moins un carbonate de calcium, caractérisé en ce que ledit procédé comprend les étapes de :
a) concasser le ou les matériaux minéraux dans au moins une unité de concassage jusqu'à l'obtention d'un matériau concassé avec un d₉₅ inférieur à 10 cm ;
b) éventuellement bonifier tout ou partie du matériau concassé selon l'étape a) ;
c) broyer à sec le matériau concassé selon l'étape a) et / ou b) dans au moins une unité de broyage :
   (i) en présence d'au moins un polymère hydrophile de type peigne contenant au moins une fonction oxyde de polyalkylène greffée sur au moins un monomère à insaturation éthylénique,
   (ii) de telle manière à ce que la quantité de liquide dans ladite unité de broyage est inférieure à 15 % en poids sec dudit matériau concassé dans ladite unité de broyage ;
d) éventuellement classifier le matériau broyé à sec selon l'étape c) avec au moins une unité de classification ;
e) éventuellement répéter les étapes c) et / ou d) sur tout ou une partie du matériau broyé à sec issu de l'étapes c) et / ou d);
et caractérisé en ce que le matériau récupéré suite à l'étape c) et / ou d) et / ou e) a un d₅₀ (diamètre moyen) de 0,5 à 500 microns.

En ce qui concerne la présente invention, ladite étape a) de concassage né met pas en oeuvre un polymère hydrophile de type peigne contenant au moins une fonction oxyde de polyalkylène greffée sur au moins un monomère à insaturation éthylénique.

Une étape de concassage, tel que mis en oeuvre lors de l'étape a) de la présente invention, se distingue d'une étape de broyage, tel que mis en oeuvre lors de l'étape c) de la présente invention, en ce que le concassage est une commination essentiellement grossière, généralement menant a l'obtention de fragment avec un diamètre moyen de l'ordre du centimètre, voir du millimètre, tandis que le broyage consiste en une opération de fragmentation menant a un produit nettement plus fin que le produit concassé, de diamètre moyen de 0,5 à 500 microns.

Le procédé selon l'invention est aussi caractérisé en ce qu'au moins une des unités de concassage de l'étape a) est un broyeur à marteau et / ou une unité de concassage autogène.

Lors de l'étape a), le procédé selon l'invention est aussi caractérisé en ce que la quantité de liquide dans ladite unité de concassage est inférieure à 15 %, et préférentiellement est inférieur à 10 % en poids sec dudit ou desdites matériaux minéraux dans ladite unité de concassage.

L'étape a) du procédé selon l'invention est aussi caractérisé en ce que ledit ou lesdits matériaux minéraux sont concassé jusqu'à l'obtention d'un matériau concassé avec un d₉₅ inférieure à 30 mm, et préférentiellement inférieur à 5 mm.

Dans une variante, le procédé selon l'invention est caractérisé en ce que l'étape b) a lieu, c'est à dire que tout ou partie du matériau concassé selon l'étape a) est bonifié. Cette étape de bonification, qui correspond a une étape de purification de tout ou partie du matériau concassé selon l'étape a), peut notamment avoir lieu par une étape de flottation et / ou de séparation magnétique et / ou de tamisage et / ou de traitement chimique tel qu'un traitement de blanchissement oxydatif ou réductif.

En ce qui concerne l'étape c) du procédé selon l'invention, le ou les polymère(s) utilisé selon l'invention sont obtenu par des procédés connus de polymérisation radicalaire en solution, en émulsion directe ou inverse, en suspension ou précipitation dans des solvants appropriés, en présence de systèmes catalytiques et d'agents de transfert connus, ou encore par des procédés de polymérisation radicalaire contrôlée tels que la méthode dénommée Réversible Addition Fragmentation Transfer (RAFT), la méthode dénommée Atom Transfer Radical Polymerization (ATRP), la méthode dénommée Nitroxide Mediated Polymerization (NMP) ou encore la méthode dénommée Cobaloxime Mediated Free Radical Polymerization.

Ce ou ces polymère(s) sont éventuellement distillé afin d'éliminer tout solvant présent lors de la polymérisation.

Le procédé selon l'invention est aussi caractérisé en ce que lors de l'étape c), c'est à dire lors de l'étape de broyage à sec, le ou les monomères à insaturation éthylénique au sein du ou des polymère(s) hydrophile de type peigne et sur laquelle ou lesquelles est greffée au moins une fonction oxyde de polyalkylène ont chacune un poids moléculaire pondéral (Mw) compris entre 500 et 20 000 g/mole.

Dans une variante du procédé selon l'invention, le ou les monomères à insaturation éthylénique mis en oeuvre lors de l'étape c) sont non ionique et / ou anionique.

Le procédé selon l'invention est aussi caractérisé en ce que lors de l'étape c), seulement une fonction oxyde de polyalkylène est greffée sur ledit ou lesdites monomères à insaturation éthylénique.

Dans une autre variante du procédé selon l'invention, lors de l'étape c), au moins un des monomères à insaturation éthylénique sur laquelle est greffée au moins une fonction oxyde de polyalkylène est un monomère de formule (I) : 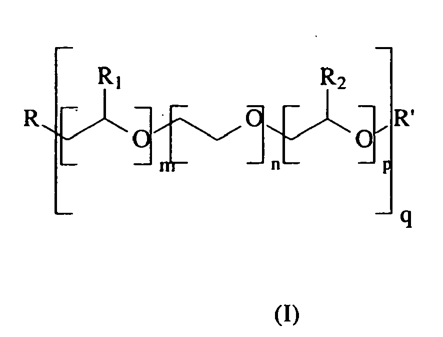 dans laquelle :
- m et p représentent un nombre de motifs d'oxyde d'alkylène inférieur ou égal à 125
- n représente un nombre de motifs d'oxyde d'éthylène inférieur ou égal à 125,
- q représente un nombre entier au moins égal à 1 et tel que 12 ≤ (m+n+p)q ≤ 450, et préférentiellement tel que 25 ≤ (m+n+p)q ≤ 140,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,

R' représente l'hydrogène ou un radical hydrocarboné ayant 1 à 22, et préférentiellement 8 à 18 atomes de carbone, ou un groupement ionique ou ionisable tel qu'un phosphate, un phosphonate, un sulfate, un sulfonate, un carboxylique, ou encore une amine primaire, secondaire ou tertiaire, ou encore leurs mélanges.

Le procédé selon l'invention est aussi caractérisé en ce que lors de l'étape c), au moins trois desdites monomères à insaturation éthylénique sur laquelle sont greffée au moins une fonction oxyde de polyalkylène sont des monomères de formule (I) : 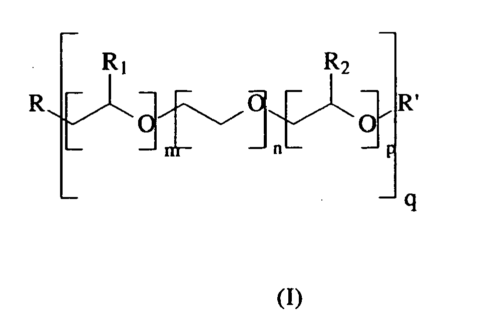 dans laquelle :
- m et p représentent un nombre de motifs d'oxyde d'alkylène inférieur ou égal à 125
- n représente un nombre de motifs d'oxyde d'éthylène inférieur ou égal à 125,
- q représente un nombre entier au moins égal à 1 et tel que 12 ≤ (m+n+p)q ≤ 450, et préférentiellement tel que 25 ≤ (m+n+p)q ≤ 140,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,

R' représente l'hydrogène ou un radical hydrocarboné ayant 1 à 22, et préférentiellement 8 à 18 atomes de carbone, ou un groupement ionique ou ionisable tel qu'un phosphate, un phosphonate, un sulfate, un sulfonate, un carboxylique, ou encore une amine primaire, secondaire ou tertiaire, ou encore leurs mélanges.

Le procédé selon l'invention est aussi caractérisé en ce que lors de l'étape c), le ou les polymère(s) hydrophile de type peigne sont constitué :
a) d'au moins un monomère anionique à insaturation éthylénique et à fonction monocarboxylique ou dicarboxylique ou phosphorique ou phosphonique ou sulfonique ou leur mélange,
b) d'au moins un monomère de formule (I) : 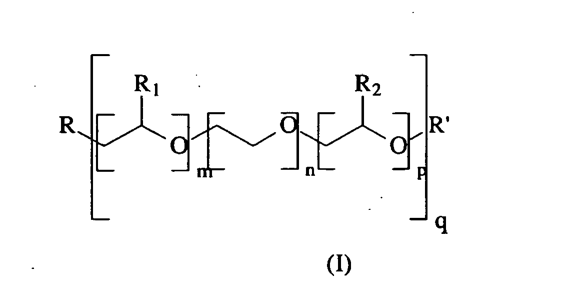 dans laquelle :
   - m et p représentent un nombre de motifs d'oxyde d'alkylène inférieur ou égal à 125,
   - n représente un nombre de motifs d'oxyde d'éthylène inférieur ou égal à 125,
   - q représente un nombre entier au moins égal à 1 et tel que 12 ≤ (m+n+p)q ≤ 450, et préférentiellement tel que 25 ≤ (m+n+p)q ≤ 140,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 22, et préférentiellement 8 à 18 atomes de carbone, ou un groupement ionique ou ionisable tel qu'un phosphate, un phosphonate, un sulfate, un sulfonate, un carboxylique, ou encore une amine primaire, secondaire ou tertiaire ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés.

Le procédé selon l'invention est aussi caractérisé en ce que lors de l'étape c), ledit ou lesdits polymère (s) hydrophile de type peigne sont constitué :
a) d'au moins un monomère anionique à insaturation éthylénique choisi parmi les monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou choisi parmi les monomères à insaturation éthylénique et à fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, ou bien encore choisi parmi les monomères à insaturation éthylénique et à fonction phosphonique tels que l'acide vinyl phosphonique, ou leurs mélanges,
b) d'au moins un monomère à insaturation éthylénique de formule (I) : 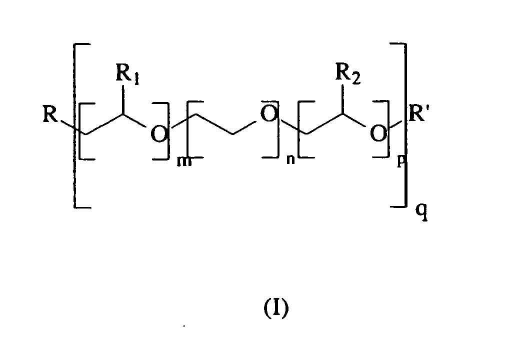 dans laquelle :
   - m et p représentent un nombre de motifs d'oxyde d'alkylène inférieur ou égal à 125,
   - n représente un nombre de motifs d'oxyde d'éthylène inférieur ou égal à 125,
   - q représente un nombre entier au moins égal à 1 et tel que 12 ≤ (m+n+p)q ≤ 450, et préférentiellement tel que 25 ≤ (m+n+p)q ≤ 140,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 22, et préférentiellement 8 à 18 atomes de carbone, ou un groupement ionique ou ionisable tel qu'un phosphate, un phosphonate, un sulfate, un sulfonate, un carboxylique, ou encore une amine primaire, secondaire ou tertiaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I).
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés.

Le procédé selon l'invention est aussi caractérisé en ce que lors de l'étape c), ledit ou lesdits polymère(s) hydrophile de type peigne sont constitué, exprimé en poids :
a) de 1 % à 15 % et encore plus particulièrement de 2 % à 10 % d'au moins un monomère anionique à insaturation éthylénique choisi parmi les monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou choisi parmi les monomères à insaturation éthylénique et à fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, ou bien encore choisi parmi les monomères à insaturation éthylénique et à fonction phosphonique tels que l'acide vinyl phosphonique, ou leurs mélanges,
b) de 80 % à 99 % et encore plus particulièrement de 90 % à 98 % d'au moins un monomère à insaturation éthylénique de formule (I) : 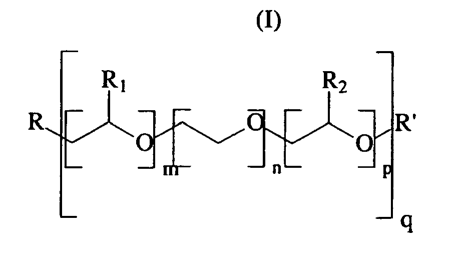 dans laquelle :
   - m et p représentent un nombre de motifs d'oxyde d'alkylène inférieur ou égal à 125,
   - n représente un nombre de motifs d'oxyde d'éthylène inférieur ou égal à 125,
   - q représente un nombre entier au moins égal à 1 et tel que 12 ≤ (m+n+p)q ≤ 450, et préférentiellement tel que 25 ≤ (m+n+p)q ≤ 140,
   - R₁ représente l'hydrogène ou le radical méthyle ou éthyle,
   - R₂ représente l'hydrogène ou le radical méthyle ou éthyle,
   - R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que par exemple les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
   - R' représente l'hydrogène ou un radical hydrocarboné ayant 1 à 22, et préférentiellement 8 à 18 atomes de carbone, ou un groupement ionique ou ionisable tel qu'un phosphate, un phosphonate, un sulfate, un sulfonate, un carboxylique, ou encore une amine primaire, secondaire ou tertiaire, ou encore leurs mélanges, et représente préférentiellement un radical hydrocarboné ayant 1 à 12 atomes de carbone et très préférentiellement un radical hydrocarboné ayant 1 à 4 atomes de carbone,
   ou du mélange de plusieurs monomères de formule (I),
c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés,
le total des proportions des constituants a), b) et c) étant égal à 100 %.

Lorsque le ou les monomères anioniques à insaturation éthylénique sont des monomères anioniques à insaturation éthylénique et à fonction monocarboxylique ou dicarboxylique et R₁, R₂ et R' représentent l'hydrogène dans le ou les monomères à insaturation éthylénique de formule (I), l'étape c) du procédé selon l'invention est aussi caractérisé en ce que le rapport molaire du ou des monomères à insaturation éthylénique de formule (I) par rapport aux monomères anioniques à insaturation éthylénique et à fonction monocarboxylique ou dicarboxylique dans le ou les polymère(s) hydrophile de type peigne est de 2:3 à 1 :2 dans le cas ou (m + n + p)q est de 50 à 100, de 1:2 à 1:4 dans le cas ou (m + n + p)q est de 25 à 50, et de 1:4 à 1:10 dans le cas ou (m + n + p)q est de 12 à 25.

Dans une autre variante, l'étape c) du procédé selon l'invention est aussi caractérisé en ce que lorsque le ou les monomères anioniques à insaturation éthylénique sont des monomères anioniques à insaturation éthylénique et à fonction monocarboxylique ou dicarboxylique et le ou les monomères à insaturation éthylénique de formule (I) sont des esters methacrylate d'oxyde d'ethylene ou*** (m + n + p)q est de 40 à 130, le rapport molaire du ou des monomères à insaturation éthylénique de formule (I) par rapport aux monomères anioniques à insaturation éthylénique et à fonction monocarboxylique ou dicarboxylique dans le ou les polymère(s) hydrophile de type peigne est de 1:2.

Ce ou ces polymère(s) obtenu sous forme acide, peuvent être également partiellement ou totalement neutralisé par un ou plusieurs agents de neutralisation disposant d'une fonction neutralisante monovalente ou d'une fonction neutralisante polyvalente tels que par exemple pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que par exemple la stéarylamine, les éthanolamines (mono-, di-, triéthanolamine), la mono et diéthylamine, la cyclohexylamine, la méthylcyclohexylamine, l'amino méthyl propanol, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

Chaque agent de neutralisation intervient alors selon des taux de neutralisation propres à chaque fonction de valence.

La Demanderesse tient à indiquer que ledit ou lesdits polymère(s) hydrophile de type peigne, lorsqu'ils sont mis en oeuvre selon le procédé de l'invention, peuvent être à l'état de poudre sèche ou à l'état liquide, c'est-à-dire sous forme d'une émulsion ou d'une suspension aqueuse, et que de manière préférentielle, ledit ou lesdits polymère(s) hydrophile de type peigne sont mis en oeuvre à l'état liquide. L'homme du métier saura mettre en oeuvre de tel(s) polymère(s) hydrophile de type peigne à l'état liquide de telle manière à ce que la quantité de liquide dans ladite unité de broyage est inférieure à 15 % en poids sec dudit matériau dans ladite unité de broyage.

Selon une autre variante, le ou les polymère(s) hydrophile de type peigne sont traités et séparés en plusieurs phases par un ou plusieurs solvants polaires appartenant notamment au groupe constitué par l'eau, le méthanol, l'éthanol, le propanol, l'isopropanol, les butanols, l'acétone, le tétrahydrofurane ou leurs mélanges, avant leurs mis en oeuvre dans l'étape c).

Dans ce cas, ce ou ces polymère(s) hydrophile de type peigne sont distillés afin d'éliminer le solvant présent lors de ce fractionnement, avant leurs mis en oeuvre dans l'étape c).

Au regard du ou des polymère(s) hydrophile de type peigne mis en oeuvre au cours de l'étape c) du procédé, l'invention peut aussi être caractérisée en ce que ledit ou lesdits polymère(s) hydrophile de type peigne présentent chacune un poids moléculaire pondérale (Mw) de 1 800 à 100 000 g/mole, et préférentiellement de 20 000 à 50 000 g/mole.

En ce qui concerne la quantité de ou des polymère(s) hydrophiles de type peigne employé dans la présente invention, cette quantité doit être déterminée par l'homme du métier en fonction de l'objectif final en terme de taille de particules. Toutefois, il peut être avantageux de mettre en oeuvre de 0,005 à 1,0 % en poids sec, préférentiellement de 0,03 à 0,5 % en poids sec de polymère hydrophile de type peigne, par rapport au poids sec du matériau concassé dans chaque unité de broyage.

Selon une autre variante, le procédé selon la présente invention peut être conduit de telle manière à ce que la quantité de ou des polymère(s) hydrophile de type peigne mise en oeuvre dans chaque unité de broyage soit comprise entre 0,1 et 1 mg de polymère hydrophile de type peigne par m² de matériau récupéré, et préférentiellement comprise entre 0,2 et 0,6 mg de polymère hydrophile de type peigne par m² de matériau récupéré.

De manière additionnelle, il peut être intéressant d'employer au moins un polymère hydrophile de type peigne caractérisé en ce que, lorsqu'il est soumis à une température de 45 °C pendant une période de 16 heures, plus de 75 %, préférentiellement plus de 90 % de 50 mg de ou des polymère(s) hydrophile de type peigne mis dans 50 ml d'eau, ne sont pas volatilisés.

Les diverses formes du ou des polymère(s) hydrophile de type peigne selon le procédé de la présente invention peuvent être mélangés entre elles de manière à former un mélange d'au moins deux polymères hydrophile de type peigne utilisables dans l'étape c) du procédé de la présente invention.

Les diverses formes du ou des polymère(s) hydrophile de type peigne mis en oeuvre dans le procédé de la présente invention peuvent être aussi mélangées avec des agents qui ne sont pas du type peigne avant ou pendant l'étape c) du procédé. Dans ce cas, il est préférable que ledit polymère hydrophile de type peigne représente au moins 50 % en poids, préférentiellement au moins 85 % en poids, et très préférentiellement au moins 95 % en poids, du poids total constitué par le ou les polymère(s) hydrophile de type peigne et des agents qui ne sont pas du type peigne.

Dans une variante particulière de la présente invention, l'agent qui n'est pas du type peigne est un carbohydrate, un polyéthylène glycole (PEG), la tri isopropanol amine (TIPA), ou leurs mélanges.

Ladite PEG peut être utilisée avantageusement en combinaison avec un polymère hydrophile de type peigne de poids moléculaire compris entre 500 et 10 000, et préférentiellement de 1 000 à 8 000 g/mole, et dans un ratio PEG : polymère hydrophile de type peigne égal à 50:50.

Ladite TIPA peut être utilisée avantageusement en combinaison avec un polymère hydrophile de type peigne dans un ratio TIPA : polymère hydrophile de type peigne égal à 20:80.

Ledit carbohydrate peut être un sucrose, un sorbitol, ou leurs mélanges.

Le procédé selon la présente invention peut être particulièrement mis en oeuvre pour un matériau qui comprend au moins 80 %, préférentiellement au moins 90 % en poids de carbonate de calcium par rapport au poids dudit matériau dans ladite unité de broyage.

En ce qui concerne le carbonate de calcium, il peut s'agir de calcaire, un marbre, une craie, une dolomite ou leurs mélanges, et préférentiellement il s'agit d'un calcaire, d'un marbre ou de leurs mélanges.

La partie non carbonate de calcium du matériau dans ladite unité de broyage peut consister en une argile, un silicate non argileux, une silice, ou leurs mélanges. De manière préférentielle, cette argile peut être une bentonite, un kaolin, un feldspath, une argile calcinée ou leurs mélanges, et ce silicate non argileux est un talc, un mica ou leurs mélanges.

Dans le procédé selon l'invention, la quantité de liquide dans l'unité de broyage est inférieure à 15 %, préférentiellement inférieur à 10 %, plus préférentiellement inférieure à 5 %, et encore plus préférentiellement inférieure à 1 % en poids, par rapport au poids sec total du matériau à broyer dans ladite unité de broyage. Cette quantité de liquide est déterminée par la perte de poids observée lorsque le matériau broyé dans l'unité de broyage est chauffé dans une étuve à 120 °C jusqu'à ce qu'un poids constant soit obtenu ; la perte en poids exprimé en pourcentage du poids de départ du matériau original indique la teneur en liquide.

Le liquide dans l'unité de broyage peut contenir de l'eau et / ou un ou plusieurs solvants organiques et / ou un ou plusieurs additifs à l'état liquide. Selon une variante de l'invention, ce liquide contient au moins 60 %, et préférentiellement au moins 70 % en poids d'eau par rapport au poids du liquide.

En ce qui concerne les unités de broyage mises en oeuvre au cours de l'étape c), elles peuvent consister en au moins un broyeur à roue comprenant des roues de broyage et / ou au moins un broyeur à boulets comprenant des billes de broyage et / ou un broyeur à broche. En ce qui concerne lesdites unités, il peut être avantageux de mettre en oeuvre une vitesse périphérique comprise entre 5 et 60 m/s, préférentiellement entre 20 et 40 m/s. La température atteinte dans les unités de broyage mises en oeuvre au cours de l'étape c) est généralement comprise entre 5 et 150°C, et plus particulièrement entre 50 et 110°C.

Dans le cas d'un broyeur à boulets, les billes de broyage qui y sont présentes ont une dureté Brinell comprise entre 510 et 600. Préférentiellement, elles sont constituées de fer, tels que des alliages à base de fer avec du molybdène ou du chrome, de la porcelaine et / ou des silicates, et elles présentent un diamètre moyen de billes compris entre 5 et 50 mm, préférentiellement entre 15 et 25 mm. Dans un aspect préféré de la présente invention, ces billes de broyage présentent un rapport d'aspect (rapport longueur/ diamètre) compris entre 1/3 et 3/1. Dans certains cas, il peut être avantageux d'utiliser des billes de broyage présentant une distribution bimodale de diamètres.

Selon un autre aspect préféré, ces billes de broyage sont présentes dans un ratio volumique par rapport au matériau à broyer contenu dans le broyeur à boulet compris entre 1,8:1 et 3,6:1, et préférentiellement en ce que ce ratio est égal à 2,5:1.

L'étape c) de broyage à sec du procédé selon la présente invention peut aussi être suivi par une ou plusieurs étapes de classification d).

Dans le cas où 2 étapes de classification au moins ont lieu avant toute étape ultérieure c), l'une ou l'autre de ces 2 étapes peut avoir lieu en série ou en parallèle.

Cette classification peut avoir notamment lieu dans un classificateur de type cyclone et / ou de type rotor. Il est alors préférable que le flux ascendant du gaz de transport de cette unité de classification, qui est préférentiellement de l'air, présente une vitesse comprise entre 3 et 15 m/s, préférentiellement entre 8 et 12 m/s.

Dans certains cas, il peut être avantageux de faire re circuler une partie du matériau issu de l'étape de classification d) jusqu'à l'étape c) pour un broyage additionnel. C'est notamment le cas pour les particules classifiées ayant un diamètre moyen en dehors de la gamme requise pour les matériaux broyés de la présente invention dits "matériaux récupérés". Il peut être intéressant que les matériaux récupérés selon la présente invention présentent un d₅₀ (diamètre moyen) compris entre 0,7 et 150 microns, préférentiellement compris entre 1 et 45 microns, et plus préférentiellement compris entre 1,2 et 5 microns.

Dans le cas où les matériaux récupérés sont extraits à la suite de l'étape de classification et où les matériaux restants sont réintroduits au niveau de l'étape c), il peut être intéressant de rajouter une quantité fraîche de matériau concassé correspondant à la quantité de matériaux récupérés issus de l'étape d) au niveau de l'étape c), en vue de maintenir un poids constant de matériau dans l'unité de broyage.

Un autre objet de l'invention consiste dans les produits caractérisés en ce qu'ils sont obtenus par le procédé selon la présente invention.

Un autre objet de la présente invention est l'utilisation du produit issu des étapes c) et / ou d) et / ou e) du procédé selon l'invention, dans un procédé de broyage en voie humide, ledit broyage humide pouvant avoir lieu en présence éventuelle d'agents dispersants, afin d'obtenir un produit broyé avec un d₅₀ (diamètre moyen) de 0,4 à 1,0 microns, et préférentiellement afin d'obtenir un produit broyé avec un d₅₀ (diamètre moyen) de 0,6 à 0,9 microns.

### EXEMPLES

Les exemples suivants sont non limitatifs et sont ici dans le but d'illustrer certains aspects de la présente invention, et ils ne sauraient en rien limiter la portée de la présente invention.

### Méthode de mesure

Les caractéristiques granulométriques mesuré dans les exemples suivantes sont détermines a partir de mesures effectuées avec un granulomètre Malvern™ Mastersizer™ S version 2.8 pour les tailles de particule inférieure à 100 microns et par tamisage pour les tailles de particule supérieure à 100 microns.

### Agents d'aide au broyage

Les agents d'aide au broyage référencés PEG 6000 consistent en polyéthylène glycol avec un poids moléculaire de 6 000 g/mole, et ont été obtenus auprès de la société FLUKA™.

Les agents d'aide au broyage référencés MPG consiste en 1,2-propanediol, et ont été obtenus auprès de la société FLUKA™.

Les agents d'aide au broyage référencés EG consiste en éthylène glycol, et ont été obtenus auprès de la société FLUKA™.

Les agents d'aide au broyage référencés PP1 consiste en un polymère formé par la polymérisation radicalaire de 14.0 % molaire de méthacrylate de polyéthylène glycol de poids moléculaire de 2 000 g/mole, 66.0 % molaire d'acide acrylique et 20.0 % molaire d'acide maleique, et présente un poids moléculaire de 45 300 g/mole.

Les agents d'aide au broyage référencés PP2 consiste en un polymère formé par la polymérisation radicalaire de 27.4 % molaire de méthacrylate de polyéthylène glycol de poids moléculaire de 2 000 g/mole, 33.6 % molaire d'acide acrylique et 39.0 % molaire d'acide maléique, et présente un poids moléculaire de 46 870 g/mole.

Les agents d'aide au broyage référencés PP3 consiste en un polymère formé par la polymérisation radicalaire de 41.3 % molaire de méthacrylate de polyéthylène glycol de poids moléculaire de 2 000 g/mole et 58.8 % molaire d'acide maléique, et présente un poids moléculaire de 48 000 g/mole.

Les agents d'aide au broyage référencés PP4 consiste en un polymère formé par la polymérisation radicalaire de 15.4 % molaire de méthacrylate de polyéthylène glycol de poids moléculaire de 5 000 g/mole, 67.0 % molaire d'acide acrylique et 17.6 % molaire d'acide maléique, et présente un poids moléculaire de 36 000 g/mole.

Les agents d'aide au broyage référencés PP5 consiste en un polymère formé par la polymérisation radicalaire de 31.0 % molaire de méthacrylate de polyéthylène glycol de poids moléculaire de 5 000 g/mole, 33.8 % molaire d'acide acrylique et 35.2 % molaire d'acide maléique, et présente un poids moléculaire de 49 270 g/mole.

Les agents d'aide au broyage référencés PP6 consiste en 46.8 % molaire de méthacrylate de polyéthylène glycol de poids moléculaire de 5 000 g/mole et 53.2 % molaire d'acide maléique, et présente un poids moléculaire de 44 700 g/mole.

Les agents d'aide au broyage référencés PP7 consiste en un polymère formé par la polymérisation radicalaire de 81.3 % en poids de méthacrylate de polyéthylène glycol de poids moléculaire de 2 000 g/mole, et 18.7 % en poids d'acide acrylique, et présente un poids moléculaire de 35 000 g/mole. Les groupements carboxyles des monomères anioniques (acide acrylique) sont entièrement neutralisés par le sodium.

Les agents d'aide au broyage référencés PP8 consiste en un polymère formé par la polymérisation radicalaire de 84.4 % en poids de méthacrylate de polyéthylène glycol de poids moléculaire de 5 000 g/mole, et 15.6 % en poids d'acide acrylique, et présente un poids moléculaire de 42 000 g/mole. Les groupements carboxyles des monomères anioniques (acide acrylique) sont entièrement neutralisés par le sodium.

Les agents d'aide au broyage référencés PP9 consiste en un polymère formé par la polymérisation radicalaire de 93.2 % en poids d'un monoéther d'acide maléique avec des chaînes latéraux de polyéthylène glycol de poids moléculaire de 5 600 g/mole, et 6.8 % en poids d'acide maleic, et présente un poids moléculaire d'approximativement 35 000 g/mole.

Avant leurs mis en oeuvre, les agents d'aide au broyage évoqué ci-dessus étaient mis en suspension aqueuse de tel sorte qu'elles représentaient 60 % en poids par rapport au poids total de la suspension aqueuse, et afin d'obtenir une suspension fluide. La quantité d'eau ainsi introduite dans le procédé de broyage au biais de ces suspensions d'agents d'aide au broyage correspondait à une quantité d'eau inférieure à 1 % en poids par rapport au poids total du matériau dans l'enceinte de broyage.

### Exemple 1

Cet exemple illustre la capacité de broyage améliorée dans un procédé selon la présente invention, mettant en oeuvre un broyeur à boulets et un marbre autrichien, par rapport à un procédé ne mettant pas en oeuvre d'agent d'aide au broyage à sec ou un agent d'aide au broyage à sec de l'art antérieur.

Avant le broyage, le marbre de diamètre moyen de 5 cm a été préalablement concassé dans un broyeur à marteau.

La distribution de tailles suite à cette étape de concassage est donnée dans le tableau ci-dessous.

**Tableau 1**

| **Fraction de particules dont le diamètre est :** | **%** |
|---|---|
| > 1 mm | 17.2 |
| 500µm - 1mm | 16.5 |
| 200-500 µm | 18.8 |
| 100-200 µm | 12.8 |
| 50-100 µm | 16.3 |
| < 50 µm | 18.4 |

Ce marbre a été introduit dans un broyeur à boulets "Hosokawa™ Ball Mill S.O. 80/32" commercialisé par la société HOSOKAWA™ (utilisant 100 kg de billes de broyage en fer Cylpeb™, en forme de tonneau, ayant un diamètre moyen de 25 mm), en vue d'obtenir un matériau broyé ayant un diamètre médian égal à 1,5 µm et avec un débit d'air de 300 m³/heure.

Le broyage à sec est réalisé de manière continue.

La sortie de la chambre de broyage est équipée d'une ouverture de taille 20 x 6 mm menant à un classificateur Alpine Turboplex™ 100 ATP commercialisé par la société ALPINE™. Le classificateur est réglé à 300 m³/heure alors que sa vitesse de rotation et la vitesse de l'air sont réglées de manière à obtenir un matériau broyé présentant un diamètre inférieur ou égal à une valeur donnée (le matériau ainsi broyé est appelé matériau récupéré) ; les matériaux broyés restants de diamètre supérieur à cette valeur sont réintroduits dans l'alimentation du broyeur.

Le broyage est réalisé de telle manière à ce que 15 kg du matériau à broyer soit constamment présent dans le système. Ainsi, l'alimentation est continuellement alimentée avec la quantité de matériau concassé frais correspondant à la quantité de matériau récupéré et qui sort du système et ce, de manière à maintenir 15 kg de matériau dans le système.

Après le démarrage du système et avant d'enregistrer les résultats qui sont indiqués ci-dessous, on a fait fonctionner le système jusqu'à obtenir des valeurs stables pour la quantité de matériau broyé valorisable, la capacité de broyage et l'énergie de broyage.

Les agents d'aide au broyage à sec ont été introduits dans le système de broyage de manière à maintenir une quantité constante d'agents d'aide au broyage par rapport au matériau à broyer.

**Tableau 2**

| **Essai** | **Type d'agent d'aide au broyage** | **Quantité d'agent d'aide au broyage (ppm)** | **Vitesse de rotation du classificateur (rpm)** | **% particules avec un diamètre < 2 µm / < 1 µm** | **Produit broyé d₅₀ (µm)** | **Capacité de broyage (kg/h)** |
|---|---|---|---|---|---|---|
| Invention | | | | | | |
| A | PP6 | 1500 | 10000 | 72/27 | 1.5 | 5.6 |
| B | PP2 | 1500 | 10000 | 66/24 | 1.6 | 6.5 |
| C | PP5 | 1500 | 10000 | 68/25 | 1.5 | 5.5 |
| D | PP1 | 1500 | 10000 | 68/25 | 1.5 | 6.9 |
| E | PP4 | 1500 | 10000 | 68/24 | 1.5 | 5.7 |
| F | PP3 | 1500 | 10000 | 71/27 | 1.5 | 6.6 |
| G | PP7 | 1500 | 10000 | 73/26 | 1.4 | 5.8 |
| H | PP9 | 1500 | 10000 | 70/23 | 1.5 | 5.6 |

| Art Antérieur | | | | | | |
|---|---|---|---|---|---|---|
| I | Aucun | -- | 10000 | 72/25 | 1.5 | 3.7 |
| J | MPG | 1500 | 10000 | 70/26 | 1.5 | 5.2 |
| K | EG | 1500 | 10000 | 69/27 | 1.5 | 5.3 |

Les résultats du tableau 2 (qui ont une marge d'erreur de 10%) démontrent clairement que la capacité de broyage est améliorée dans le cadre de l'invention.

### Exemple 2

Cet exemple illustre la capacité de broyage améliorée dans un procédé selon la présente invention, mettant en oeuvre un broyeur à broches et un marbre italien du sud tyrolle, par rapport à un procédé mettant en oeuvre un agent d'aide au broyage de l'art antérieur.

Avant le broyage, le marbre de diamètre médian de 1 à 10 cm a été préalablement concassé dans un broyeur à marteau et tamiser à 1 mm afin de récupérer la fraction ayant un diamètre supérieur a 1 mm pour le broyage décrit ci-dessous.

La distribution de tailles de particules suite à cette étape de concassage est donnée dans le tableau ci-dessous.

**Tableau 3**

| **Fraction de particules dont le diamètre est :** | **%** |
|---|---|
| 2800 µm - 5000 µm | 15% |
| 1000 µm - 2800 µm | 80 % |
| < 1000 µm | <1% |

2 500 g du marbre de tableau 3 a été traité par les agents indiquée ci-dessous sous une agitation de 2 heures en présence de l'agent dans une enceinte rotatif avant d'être manuellement introduit sur une période de 15 minutes dans un broyeur à broches de type Kolloplex 160 Z (diamètre du rotor 16 cm, vitesse du rotor 14 000 rpm) commercialisé par la société HOSOKAWA™. Suite au broyage, le matériel récupéré est tamisé sur un tamis de 100 microns. La fraction récupérée avec un diamètre inférieur à 100 microns a été analysée par Malvern.

Afin d'illustrer le procédé selon l'invention, 500 ppm d'un agent d'aide au broyage consistant en 50 % en poids de PP8 et 50 % en poids de PEG 6000 a été ajouté au marbre en forme d'une solution aqueuse comportant 15 % en poids de cet agent.

Afin d'illustrer le procédé selon l'art antérieur, 500 ppm d'un agent d'aide au broyage consistant en MPG a été ajouté au marbre en forme d'une solution aqueuse comportant 15 % en poids de cet agent.

Les résultats sont donnés dans le tableau ci-dessous.

**Tableau 4**

| **Art Antérieur** | | **Invention** | |
|---|---|---|---|
| 99.1% | < 100 µm | 99.5 % | < 100 µm |
| d₉₀ | 39.2 µm | d₉₀ | 38.7 µm |
| d₅₀ | 15.0 µm | d₅₀ | 15.0 µm |
| d₁₀ | 2.2 µm | d₁₀ | 2.4 µm |

Le procédé selon l'invention permet d'obtenir un produit comparable a celui obtenu par un procédé utilisant un agent de l'art antérieur.

### Exemple 3

La volatilité de différents agents d'aide au broyage dans différents solvants a été comparée, après stockage pendant 16 heures dans une étuve ventilée à 45 °C.

Dans chacun des essais, 50 mg de l'agent d'aide au broyage indiqué ont été introduits dans une cuvette ouvert et mélangés avec 50 ml de solvant avant introduction dans l'étuve.

Le degré de volatilité a été déterminé en mesurant le poids résiduel dans chaque ballon après une période de 16 heures, afin de calculer le pourcentage de perte en poids de l'agent d'aide au broyage.

**Tableau 5**

| **Agent d'aide au broyage à sec** | **Volatilité dans l'eau** | **Volatilité dans le méthanol** | **Volatilité dans l'éthanol** |
|---|---|---|---|
| **Selon l'invention** | | | |
| PP1/PP2/PP3 | < 10 % | < 10 % | < 10 % |
| PP4/PP5/ PP6 | < 10 % | < 10 % | |
| Mélange 1:1 | < 10 % | < 10 % | < 10 % |
| en poids de PP8 et | | | |
| PEG 6000 | | | |
| PP7 | <10% | <10% | <10% |

| **Selon l'art antérieur** | | | |
|---|---|---|---|
| MPG | > 90% | > 90% | |
| EG | > 90% | > 90% | |

Les résultats du tableau 5 démontrent que les agents d'aide au broyage selon l'art antérieur sont plus volatiles que ceux utilisé dans le procédé de l'invention, malgré leur faible pression de vapeur.

### Exemple 4

Cet exemple illustre la capacité de broyage améliorée dans un procédé selon la présente invention, mettant en oeuvre un broyeur à boulets et un marbre italien, par rapport à un procédé ne mettant pas en oeuvre d'agent d'aide au broyage à sec.

Avant le broyage, le marbre de diamètre moyen de 5 cm a été préalablement concassé dans un broyeur à marteau.

La distribution de tailles suite à cette étape de concassage est donnée dans le tableau ci-dessous.

**Tableau 6**

| **Fraction de particules dont le diamètre est :** | % |
|---|---|
| > 1 mm | 30.70 |
| 500µm - 1mm | 8.40 |
| 200-500 µm | 17.50 |
| 100-200 µm | 19.10 |
| < 100 µm | 24.30 |

Ce marbre a été introduit dans un broyeur à boulets "Hosokawa™ Ball Mill S.O. 80/32" commercialisé par la société HOSOKAWA™ (utilisant 100 kg de billes de broyage en fer Cylpeb™, en forme de tonneau, ayant un diamètre moyen de 25 mm), en vue d'obtenir un matériau broyé ayant un diamètre médian égal à 3.0 µm et avec un débit d'air de 300 m³/heure.

Le broyage à sec est réalisé de manière continue.

La sortie de la chambre de broyage est équipée d'une ouverture de taille 20 x 6 mm menant à un classificateur Alpine Turboplex™ 100 ATP commercialisé par la société ALPINE™. Le classificateur est réglé à 300 m³/heure alors que sa vitesse de rotation et la vitesse de l'air sont réglées de manière à obtenir un matériau broyé présentant un diamètre inférieur ou égal à une valeur donnée (le matériau ainsi broyé est appelé matériau récupéré) ; les matériaux broyés restants de diamètre supérieur à cette valeur sont réintroduits dans l'alimentation du broyeur.

Le broyage est réalisé de telle manière à ce que 15 kg du matériau à broyer soit constamment présent dans le système. Ainsi, l'alimentation est continuellement alimentée avec la quantité de matériau concassé frais correspondant à la quantité de matériau récupéré et qui sort du système et ce, de manière à maintenir 15 kg de matériau dans le système. La durée de l'essai est égale à 6 heures.

L'agent d'aide au broyage à sec a été introduit dans le système de broyage de manière à maintenir une quantité constante d'agent d'aide au broyage par rapport au matériau à broyer.

Cet agent d'aide au broyage, référencé PP10, consiste en un polymère formé par la copolymérisation radicalaire de 25.0 % en poids de méthacrylate de polyéthylène glycol de poids moléculaire de 1 100 g/mole fonctionnalisé par un radical R' hydrophobe hexyl 1-décanyle , et de 75.0 % en poids d'acide acrylique, et présente un poids moléculaire approximatif de 35 000 g/mole. Les groupements carboxyles du monomère anionique (acide acrylique) sont entièrement neutralisés par le sodium.

**Tableau 7**

| **Essai** | **Type d'agent d'aide au broyage** | **Agent d'aide au broyage (poids moléculaire g/mol)** | **Quantité d'agent d'aide au broyage (ppm)** | **Vitesse de rotation du classificateur (rpm)** | **Produit broyé d₅₀ (µm)** | **Capacité moyenne de broyage (kg/h)** |
|---|---|---|---|---|---|---|
| Selon l'invention | | | | | | |
| L | PP10 | 35000 | 1500 | 7000 | 2.91 | 5.04 |
| Témoin | | | | | | |
| M | Aucun | ----- | 0 | 7000 | 3.00 | < 1.0 |

Les résultats du tableau 7 (qui ont une marge d'erreur de 10%) démontrent clairement que la capacité de broyage est améliorée dans le cadre de l'invention.

### Exemple 5

Cet exemple illustre l'utilisation d'un carbonate de calcium broyé à sec selon l'invention, dans un procédé de broyage humide.

Pour ce faire, on prépare une suspension aqueuse à 75% en matière sèche de carbonate de calcium par la mise en suspension dans l'eau de 5kg du carbonate de calcium sec obtenu selon l'exemple 4 en présence de 0.8% en poids sec d'un sel d'acide polyacrylique (ratio sodium/magnésium =1:1 calculé sur les groupes carboxyliques) de poids moléculaire Mw de l'ordre de 6 000 Dalton et de polydispersité égale à 2.5.
On fait ensuite circuler cette suspension aqueuse de carbonate de calcium dans un broyeur à billes de type Dynomill® de la société Firma Bachhofen (Suisse) de sorte que 90% en poids des particules de la suspension aqueuse obtenue aient un diamètre sphérique égal à 2 micromètres. Les billes de broyage mises en oeuvre sont des billes d'oxyde de zirconium stabilisé yttrium et ont un diamètre compris entre 0.5 et 1.5 mm.

La suspension aqueuse de carbonate de calcium obtenue a alors les caractéristiques suivantes :
- Distribution de la taille des particules déterminée au moyen d'un Sédigraph® 5100 de la société Micromeritics : 89% en poids < 2 micromètres, 62% en poids < 1 micromètre, 18% en poids < 0.2 micromètre.
- Viscosité Brookfield (Viscosimètre Brookfield type RVT mobile 3) à 100 tours/minute : 1710 mPas après 1 minute de mesure à une concentration en poids sec de 75.5 %,
- Viscosité Brookfield (Viscosimètre Brookfield type RVT mobile 3) à 100 tours/minute : 715 mPas après 1 minute de mesure à une concentration en poids sec de 71.9 %.

Cet exemple montre qu'un broyage en voie humide mettant en oeuvre un carbonate de calcium sec obtenu par le procédé selon l'invention est possible même à une concentration en solide élevée (>73%) correspondant à une concentration de carbonate de calcium dans la suspension aqueuse supérieure à 50% en volume de suspension.

## Revendications

1. Procédé de broyage à sec d'un ou plusieurs matériaux minéraux qui comprennent au moins un carbonate de calcium, **caractérisé en ce que** ledit procédé comprend les étapes de:
a) concasser le ou les matériaux minéraux dans au moins une unité de concassage jusqu'à l'obtention d'un matériau concassé avec un d₉₅ inférieure à 10 cm ;
b) éventuellement bonifier tout ou partie du matériau concassé selon l'étape a) ;
c) broyer à sec le matériau concassé selon l'étape a) et / ou b) dans au moins une unité de broyage :
(i) en présence d'au moins un polymère hydrophile de type peigne contenant au moins une fonction oxyde de polyalkylène greffée sur au moins un monomère à insaturation éthylénique,
(ii) de telle manière à ce que la quantité de liquide dans ladite unité de broyage est inférieure à 15 % en poids sec dudit matériau concassé dans ladite unité de broyage ;
d) éventuellement classifier le matériau broyé à sec selon l'étape c) avec au moins une unité de classification ;
e) éventuellement répéter les étapes c) et / ou d) sur tout ou partie du matériau broyé à sec issu de l'étapes c) et / ou d);
et **caractérisé en ce que** le matériau récupéré suite à l'étape c) et / ou d) et / ou e) a un d₅₀ (diamètre moyen) de 0,5 à 500 microns.

2. Procédé selon la revendication 1, **caractérisé en ce que** lors de l'étape c), le ou les monomères à insaturation éthylénique sur laquelle ou lesquelles est greffée au moins une fonction oxyde de polyalkylène ont chacune un poids moléculaire pondérale (Mw) compris entre 500 et 20 000 g/mole.

3. Procédé selon l'une des revendications 1 ou 2, **caractérisé en ce que** lors de l'étape c), ledit ou lesdites monomères à insaturation éthylénique sont non ioniques et / ou anioniques.

4. Procédé selon l'une des revendications 1 à 3, **caractérisé en ce que** lors de l'étape c), seulement une fonction oxyde de polyalkylène est greffée sur ledit ou lesdits monomères à insaturation éthylénique.

5. Procédé selon selon l'une des revendications 1 à 4, **caractérisé en ce que** lors de l'étape c), au moins un des monomères à insaturation éthylénique sur laquelle est greffée au moins une fonction oxyde de polyalkylène est un monomère de formule (I) : 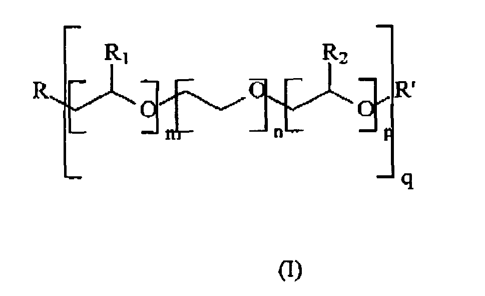 dans laquelle :
- m et p représentent un nombre de motifs d'oxyde d'alkylène inférieur ou égal à 125
- n représente un nombre de motifs d'oxyde d'éthylène inférieur ou égal à 125,
- q représente un nombre entier au moins égal à 1 et tel que 12 ≤ (m+n+p)q ≤ 450, et préférentiellement tel que 25 ≤ (m+n+p)q ≤ 140,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benxyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 22, et préférentiellement 8 à 18 atomes de carbone, ou un groupement ionique ou ionisable tel qu'un phosphate, un phosphonate, un sulfate, un sulfonate, un carboxylique, ou encore une amine primaire, secondaire ou tertiaire, ou encore leurs mélanges.

6. Procédé selon la revendication 5 **caractérisé en ce que** le radical R' représente un radical hydrocarboné linéaire ou branché.

7. Procédé selon la revendication 6 **caractérisé en ce que** le radical R' représente le radical hexyl 1 décanyle.

8. Procédé selon l'une des revendications 1 à 5, **caractérisé en ce que** lors de l'étape c), au moins trois desdits monomères à insaturation éthylénique sur laquelle sont greffée au moins une fonction oxyde de polyalkylène sont des monomères de formule (I) : 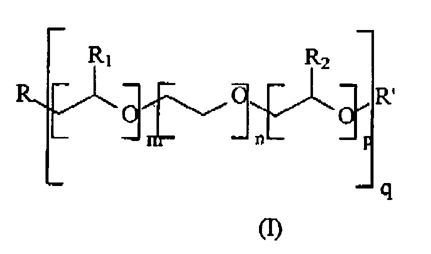 dans laquelle :
- m et p représentent un nombre de motifs d'oxyde d'alkylène inférieur ou égal à 125
- n représente un nombre de motifs d'oxyde d'éthylène inférieur ou égal à 125,
- q représente un nombre entier au moins égal à 1 et tel que 12 ≤ (m+n+p)q ≤ 450, et préférentiellement tel que 25 ≤ (m+n+p)q ≤ 140,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 22, et préférentiellement 8 à 18 atomes de carbone, ou un groupement ionique ou ionisable tel qu'un phosphate, un phosphonate, un sulfate, un sulfonate, un carboxylique, ou encore une amine primaire, secondaire ou tertiaire, ou encore leurs mélanges.

9. Procédé selon l'une des revendications 1 à 8, **caractérisé en ce que** lors de l'étape c), le ou les polymère(s) hydrophile(s) de type peigne sont constitués :
a) d'au moins un monomère anionique à insaturation éthylénique et à fonction monocarboxylique ou dicarboxylique ou phosphorique ou phosphonique ou sulfonique ou leur mélange,
b) d'au moins un monomère de formule (I) : 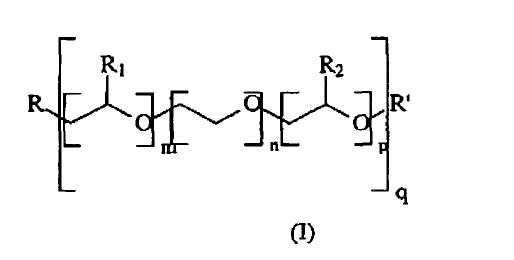 dans laquelle :
- m et p représentent un nombre de motifs d'oxyde d'alkylène inférieur ou égal à 125,
- n représente un nombre de motifs d'oxyde d'éthylène inférieur ou égal à 125,
- q représente un nombre entier au moins égal à 1 et tel que 12 ≤ (m+n+p)q ≤ 450, et préférentiellement tel que 25 ≤ (m+n+p)q ≤ 140,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 22, et préférentiellement 8 à 18 atomes de carbone, ou un groupement ionique ou ionisable tel qu'un phosphate, un phosphonate, un sulfate, un sulfonate, un carboxylique, ou encore une amine primaire, secondaire ou tertiaire ou encore leurs mélanges, et représente préférentiellement un radical hydrocarboné ayant 1 à 12 atomes de carbone et très préférentiellement un radical hydrocarboné ayant 1 à 4 atomes de carbone,
ou du mélange de plusieurs monomères de formule (I),
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés.

10. Procédé selon l'une des revendications 1 à 9, **caractérisé en ce que** lors de l'étape c), ledit ou lesdits polymère (s) hydrophile(s) de type peigne sont constitués :
a) d'au moins un monomère anionique à insaturation éthylénique choisi parmi les monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou choisi parmi les monomères à insaturation éthylénique et à fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, ou bien encore choisi parmi les monomères à insaturation éthylénique et à fonction phosphonique tels que l'acide vinyl phosphonique, ou leurs mélanges,
b) d'au moins un monomère à insaturation éthylénique de formule (I) : 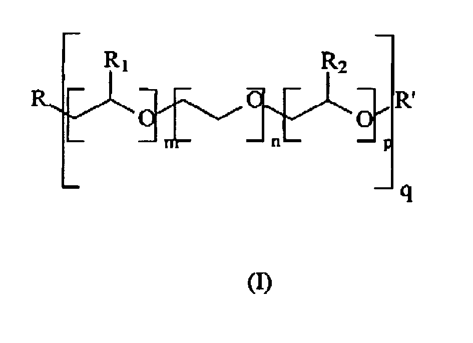 dans laquelle :
- m et p représentent un nombre de motifs d'oxyde d'alkylène inférieur ou égal à 125,
- n représente un nombre de motifs d'oxyde d'éthylène inférieur ou égal à 125,
- q représente un nombre entier au moins égal à 1 et tel que 12 ≤ (m+n+p)q ≤ 450, et préférentiellement tel que 25 ≤ (m+n+p)q ≤ 140,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α-α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 22, et préférentiellement 8 à 18 atomes de carbone, ou un groupement ionique ou ionisable tel qu'un phosphate, un phosphonate, un sulfate, un sulfonate, un carboxylique, ou encore une amine primaire, secondaire ou tertiaire, ou encore leurs mélanges, et représente préférentiellement un radical hydrocarboné ayant 1 à 12 atomes de carbone et très préférentiellement un radical hydrocarboné ayant 1 à 4 atomes de carbone,
ou du mélange de plusieurs monomères de formule (I).
c) éventuellement d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) ethyl], les vinyliques tels que l'acétate de vinyle, la vinylpyrrolidone, le styrène, l'alphaméthylstyrène et leurs dérivés.

11. Procédé selon l'une des revendications 1 à 9, **caractérisé en ce que** lors de l'étape c), ledit ou lesdits polymère(s) hydrophile(s) de type peigne sont constitués, exprimé en poids :
a) de 1 % à 15 % et encore plus particulièrement de 2 % à 10 % d'au moins un monomère anionique à insaturation éthylénique choisi parmi les monomères à insaturation éthylénique et à fonction monocarboxylique tels que l'acide acrylique ou méthacrylique ou encore les hémiesters de diacides tels que les monoesters en C₁ à C₄ des acides maléique ou itaconique, ou leurs mélanges, ou choisi parmi les monomères à insaturation éthylénique et à fonction dicarboxylique tels que l'acide crotonique, isocrotonique, cinnamique, itaconique, maléique, ou encore les anhydrides d'acides carboxyliques, tels que l'anhydride maléique ou choisi parmi les monomères à insaturation éthylénique et à fonction sulfonique tels que l'acide acrylamido-méthyl-propane-sulfonique, le méthallylsulfonate de sodium, l'acide vinyl sulfonique et l'acide styrène sulfonique ou bien encore choisi parmi les monomères à insaturation éthylénique et à fonction phosphorique tels que l'acide vinyl phosphorique, le phosphate de méthacrylate d'éthylène glycol, le phosphate de méthacrylate de propylène glycol, le phosphate d'acrylate d'éthylène glycol, ou bien encore choisi parmi les monomères à insaturation éthylénique et à fonction phosphonique tels que l'acide vinyl phosphonique, ou leurs mélanges,
b) de 80 % à 99 % et encore plus particulièrement de 90 % à 98 % d'au moins un monomère à insaturation éthylénique de formule (I) : 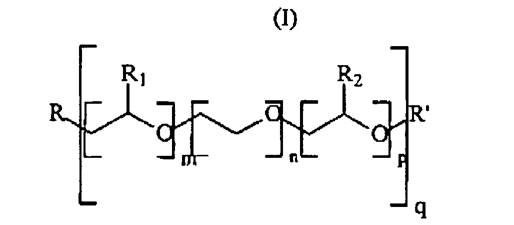 dans laquelle:
- m et p représentent un nombre de motifs d'oxyde d'alkylène inférieur ou égal à 125,
- n représente un nombre de motifs d'oxyde d'éthylène inférieur ou égal à 125,
- q représente un nombre entier au moins égal à 1 et tel que 12 ≤ (m+n+p)q ≤ 450, et préférentiellement tel que 25 ≤ (m+n+p)q ≤ 140,
- R₁ représente l'hydrogène ou le radical méthyle ou éthyle,
- R₂ représente l'hydrogène ou le radical méthyle ou éthyle,
- R représente un radical contenant une fonction insaturée polymérisable, appartenant préférentiellement au groupe des vinyliques ainsi qu'au groupe des esters acrylique, méthacrylique, maléique, itaconique, crotonique, vinylphtalique ainsi qu'au groupe des insaturés uréthannes tels que les acryluréthanne, méthacryluréthanne, α - α' diméthyl-isopropényl-benzyluréthanne, allyluréthanne, de même qu'au groupe des éthers allyliques ou vinyliques substitués ou non, ou encore au groupe des amides ou des imides éthyléniquement insaturées,
- R' représente l'hydrogène ou un radical hydrocarboné ayant 1 à 22, et préférentiellement 8 à 18 atomes de carbone, ou un groupement ionique ou ionisable tel qu'un phosphate, un phosphonate, un sulfate, un sulfonate, un carboxylique, ou encore une amine primaire, secondaire ou tertiaire, ou encore leurs mélanges, et représente préférentiellement un radical hydrocarboné ayant 1 à 12 atomes de carbone et très préférentiellement un radical hydrocarboné ayant 1 à 4 atomes de carbone,
ou du mélange de plusieurs monomères de formule (I),
c) de 0 % à 50 % d'au moins un monomère du type acrylamide ou méthacrylamide ou leurs dérivés tels que le N-[3-(diméthylamino) propyl] acrylamide ou le N-[3-(diméthylamino) propyl] méthacrylamide, et leurs mélanges, ou bien encore d'au moins un monomère non hydrosoluble tel que les acrylates ou méthacrylates d'alkyle, les esters insaturés tels que le méthacrylate de N-[2-(diméthylamino) éthyl], ou l'acrylate de N-[2-(diméthylamino) éthyl], les vinyliques tels que l'acétate de vinyle, la vinylpyrrolidone, le styrène, l'alphaméthylstyrène et leurs dérivés,
le total des proportions des constituants a), b) et c) étant égal à 100 %.

12. Procédé selon l'une des revendications 9 à 11, **caractérisé en ce que** lorsque le ou les monomères anioniques à insaturation éthylénique sont des monomères anioniques à insaturation éthylénique et à fonction monocarboxylique ou dicarboxylique et R₁, R₂ et R' représentent l'hydrogène dans le ou les monomères à insaturation éthylénique de formule (I), le rapport molaire du ou des monomères à insaturation éthylénique de formule (I) par rapport au monomère anioniques à insaturation éthylénique et à fonction monocarboxylique ou dicarboxylique dans le ou les polymère(s) hydrophile de type peigne est de 2:3 à 1 :2 dans le cas ou (m + n + p)q est de 50 à 100, de 1:2 à 1:4 dans le cas ou (m + n + p)q est de 25 à 50, et de 1:4 à 1:10 dans le cas ou (m + n + p)q est de 12 à 25.

13. Procédé selon l'une des revendications 9 à 12, **caractérisé en ce que** lorsque le ou les monomères anioniques à insaturation éthylénique sont des monomères anioniques à insaturation éthylénique et à fonction monocarboxylique ou dicarboxylique et le ou les monomères à insaturation éthylénique de formule (I) sont des esters methacrylate d'oxyde d'ethylene où (m + n + p)q est de 40 à 130, le rapport molaire du ou des monomères à insaturation éthylénique de formule (I) par rapport au monomère(s) anioniques à insaturation éthylénique et à fonction monocarboxylique ou dicarboxylique dans le ou les polymère(s) hydrophile de type peigne est de 1:2.

14. Procédé selon l'une des revendications 1 à 13, **caractérisé en ce que** lors de l'étape c), lorsque le ou les polymère(s) hydrophile(s) de type peigne sont sous forme acide, ils sont partiellement ou totalement neutralisés par un ou plusieurs agents de neutralisation disposant d'une fonction neutralisante monovalente ou d'une fonction neutralisante polyvalente tels que par exemple pour la fonction monovalente ceux choisis dans le groupe constitué par les cations alcalins, en particulier le sodium, le potassium, le lithium, l'ammonium ou les amines primaires, secondaires ou tertiaires aliphatiques et/ou cycliques telles que par exemple la stéarylamine, les éthanolamines (mono-, di-, triéthanolamine), la mono et diéthylamine, la cyclohexylamine, la méthylcyclohexylamine, l'amino méthyl propanol, ou bien encore pour la fonction polyvalente ceux choisis dans le groupe constitué par les cations divalents alcalino-terreux, en particulier le magnésium et le calcium, ou encore le zinc, de même que par les cations trivalents, dont en particulier l'aluminium, ou encore par certains cations de valence plus élevée.

15. Procédé selon l'une des revendications 1 à 14, **caractérisé en ce que** lors de l'étape c), le ou les polymère(s) hydrophile(s) de type peigne présentent chacun un poids moléculaire pondérale (Mw) de 1 800 à 100 000 g/mole, et préférentiellement de 20 000 à 50 000 g/mole.

16. Procédé selon l'une des revendications 1 à 15, **caractérisé en ce que** lors de l'étape c), le procédé met en oeuvre de 0,005 à 1,0 % en poids sec, préférentiellement de 0,03 à 0,5 % en poids sec de polymère hydrophile de type peigne, par rapport au poids sec du matériau concassé dans chaque unité de broyage.

17. Procédé selon l'une des revendications 1 à 16, **caractérisé en ce que** lors de l'étape c), la quantité de ou des polymère(s) hydrophile(s) de type peigne mise en oeuvre dans chaque unité de broyage est comprise entre 0,1 et 1 mg de polymère hydrophile de type peigne par m² de matériau récupéré, et préférentiellement comprise entre 0,2 et 0,6 mg de polymère hydrophile de type peigne par m² de matériau récupéré.

18. Procédé selon l'une des revendications 1 à 17, **caractérisé en ce que** lorsque le ou les polymère(s) hydrophile de type peigne de l'étape c) sont soumis à une température de 45 °C pendant une période de 16 heures, plus de 75 %, préférentiellement plus de 90 % de 50 mg de ou des polymère(s) hydrophile(s) de type peigne mis dans 50 ml d'eau, ne sont pas volatilisés.

19. Procédé selon l'une des revendications 1 à 18, **caractérisé en ce que** lors de l'étape c), le ou les polymère(s) hydrophile(s) de type peigne sont mélangés avec des agents qui ne sont pas du type peigne.

20. Procédé selon la revendication 19, **caractérisé en ce que** le ou les polymère(s) hydrophile(s) de type peigne représentent au moins 50 % en poids, préférentiellement au moins 85 % en poids, et très préférentiellement au moins 95 % en poids, du poids total constitué par le ou les polymère(s) hydrophile(s) de type peigne et les agents qui ne sont pas du type peigne.

21. Procédé selon l'une des revendications 19 ou 20, **caractérisé en ce que** l'agent qui n'est pas du type peigne est un carbohydrate, un polyéthylène glycol (PEG), la tri isopropanol amine (TIPA), ou leurs mélanges.

22. Procédé selon la revendication 21, **caractérisé en ce que** ladite TIPA est utilisée en combinaison avec un polymère hydrophile de type peigne dans un ratio TIPA : polymère hydrophile de type peigne égal à 20:80.

23. Procédé selon l'une des revendications 1 à 22, **caractérisé en ce que** lors de l'étape c), le matériau dans ladite unité de broyage contient au moins 80 %, préférentiellement au moins 90 % en poids de carbonate de calcium par rapport au poids dudit matériau dans ladite unité de broyage.

24. Procédé selon l'une des revendications 1 à 23, **caractérisé en ce que** le carbonate de calcium est un calcaire, un marbre, une craie, une dolomite ou leurs mélanges, et préférentiellement est un calcaire, un marbre ou leurs mélanges.

25. Procédé selon l'une des revendications 1 à 24, **caractérisé en ce que** lors de l'étape c), la partie non carbonate de calcium du matériau dans ladite unité de broyage consiste en une argile, un silicate non argileux, une silice, ou leurs mélanges.

26. Procédé selon l'une des revendications 1 à 25, **caractérisé en ce** l'étape c) a lieu dans au moins un broyeur à boulets comprenant des billes de broyage.

27. Procédé selon la revendication 26, **caractérisé en ce que** les billes de broyage présentent un rapport d'aspect compris entre 1/3 et 311.

28. Procédé selon l'une des revendications 1 à 27, **caractérisé en ce que** l'étape d) a lieu.

29. Procédé selon la revendication 28, **caractérisé en ce que** 2 étapes de classification au moins ont lieu avant toute étape ultérieure c), l'une ou l'autre de ces 2 étapes pouvant avoir lieu en série ou en parallèle.

30. Procédé selon l'une des revendications 28 ou 29, **caractérisé en ce qu'**on fait recirculer une partie du matériau issu de l'étape de classification d) jusqu'à l'étape c) pour un broyage additionnel.

31. Procédé selon l'une des revendications 28 à 30, **caractérisé en ce que** le matériau récupéré issus de l'étape d) présentent un d₅₀ (diamètre moyen) compris entre 0,7 et 150 microns, préférentiellement compris entre 1 et 45 microns, et plus préférentiellement compris entre 1,2 et 5 microns.

32. Procédé selon la revendication 31, **caractérisé en ce qu'**on rajoute une quantité fraîche de matériau concassé correspondant à la quantité de matériau récupéré issus de l'étape d) au niveau de l'étape c).

33. Procédé de broyage en voie humide **caractérisé en ce que** le matériau broyé selon l'étape c) du procédé selon l'une des revendications 1 à 32 est broyé en voie humide, ledit broyage pouvant avoir lieu en présence éventuelle d'agents dispersants, afin d'obtenir un produit broyé avec un d50 (diamètre moyen) de 0,4 à 1,0 microns, et préférentiellement afin d'obtenir un produit broyé avec un d50 (diamètre moyen) de 0,6 à 0,9 microns.

## Claims

1. A method for dry grinding of one or more mineral materials which include at least one calcium carbonate, **characterised in that** the said method includes the steps of:
a) crushing the mineral material or materials in at least one crushing unit until a crushed material is obtained with a d₉₅ of less than 10 cm;
b) possibly improving all or part of the material crushed according to step a);
c) dry grinding the material crushed according to step a) and/or b) in at least one grinding unit:
(i)in the presence of at least one comb-type hydrophilic polymer containing at least one polyalkylene oxide function grafted on to at least one unsaturated ethylene monomer,
(ii)in such a manner that the quantity of liquid in the said grinding unit is less than 15% by dry weight of the said material crushed in the said crushing unit;
d) possibly classifying the material dry ground according to step c) with at least one classification unit;
e) possibly repeating steps c) and/or d) on all or part of the dry ground material resulting from steps c) and/or d);
and **characterised in that** the material recovered following step c) and/or d) and/or e) has a d₅₀ (average diameter) of 0.5 to 500 microns.

2. A method according to claim 1, **characterised in that** in step c) the unsaturated ethylene monomer(s) on to which is grafted at least one polyalkylene oxide function each has a weight-average molecular weight (Mw) of between 500 and 20,000 g/mole.

3. A method according to one of the claims 1 or 2, **characterised in that** in step c) the said unsaturated ethylene monomer(s) are ionic and/or anionic.

4. A method according to one of the claims 1 to 3, **characterised in that** in step c) only one polyalkylene oxide function is grafted on to the said unsaturated ethylene monomer(s).

5. A method according to one of the claims 1 to 4, **characterised in that** in step c) at least one of the unsaturated ethylene monomers on to which at least one polyalkylene oxide function is grafted is a monomer of formula (I): 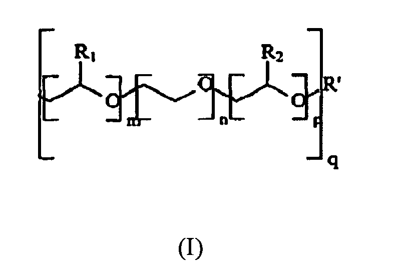 where:
- m and p represent a number of alkylene oxide units less than or equal to 125
- n represents a number of ethylene oxide units of less than or equal to 125,
- q represents a whole number at least equal to 1 and such that 12 ≤ (m+n+p)q ≤ 450, and preferentially such that 25 < (m+n+p)q ≤ 140,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic or vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 22, and preferentially 8 to 18, carbon atoms, or an ionic or ionisable grouping such as a phosphate, a phosphonate, a sulphate, a sulphonate, a carboxylic, or indeed a primary, secondary or tertiary amine, or indeed their blends.

6. A method according to claim 5 **characterised in that** radical R' represents a linear or branched hydrocarbonated radical.

7. A method according to claim 6 **characterised in that** radical R' represents the radical hexyl 1 decanyl.

8. A method according to one of the claims 1 to 5, **characterised in that** in step c) at least three of the unsaturated ethylene monomers on to which at least one polyalkylene oxide function is grafted are monomers of formula (I): 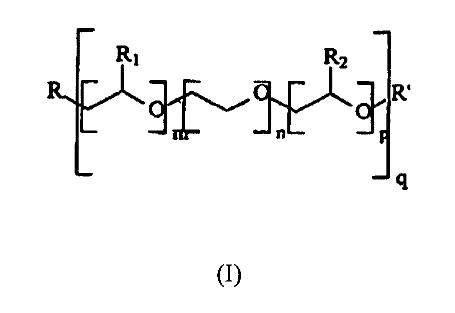 where:
- m and p represent a number of alkylene oxide units less than or equal to 125
- n represents a number of ethylene oxide units of less than or equal to 125,
- q represents a whole number at least equal to 1 and such that 12 ≤ (m+n+p)q ≤ 450, and preferentially such that 25 ≤ (m+f+n+p)q ≤ 140,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 22, and preferentially 8 to 18, carbon atoms, or an ionic or ionisable grouping such as a phosphate, a phosphonate, a sulphate, a sulphonate, a carboxylic, or indeed a primary, secondary or tertiary amine, or indeed their blends.

9. A method according to one of the claims 1 to 8, **characterised in that** in step c) the comb-type hydrophilic polymer(s) consist:
a) of at least one anionic unsaturated ethylene monomer with a monocarboxylic or dicarboxylic or phosphoric or phosphonic or sulphonic function, or their blends,
b) of at least one monomer of formula (I): 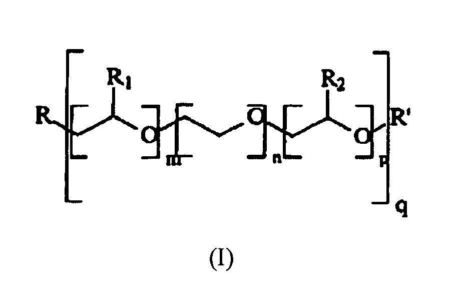 where:
m and p represent a number of alkylene oxide units of less than or equal to 125,
- n represents a number of ethylene oxide units of less than or equal to 125,
- q represents a whole number at least equal to 1 and such that 12 ≤ (m+n+p)q ≤ 450, and preferentially such that 25 ≤ (m+n+p)q ≤ 140,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 22, and preferentially 8 to 18, carbon atoms, or an ionic or ionisable grouping such as a phosphate, a phosphonate, a sulphate, a sulphonate, a carboxylic, or indeed a primary, secondary or tertiary amine, or indeed their blends, and preferentially represents a hydrocarbonated radical having 1 to 12 carbon atoms, and very preferentially a hydrocarbonated radical having 1 to 4 carbon atoms,
or a blend of several monomers of formula (I),
c) possibly at least one monomer of the acrylamide or methacrylamide type or their derivatives such as N-[3-(dimethylamino) propyl] acrylamide or N-[3-(dimethylamino) propyl] methacrylamide, and their blends, or indeed at least one non-water- soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivatives.

10. A method according to one of the claims 1 to 9, **characterised in that** in step c) the said comb-type hydrophilic polymer(s) consist:
a) of at least one anionic unsaturated ethylene monomer chosen from among the unsaturated ethylene monomers and with a monocarboxylic function such as acrylic or methacrylic acid, or again the diacid hemiesters such as the C₁ to C₄ monoesters of maleic or itaconic acids, or their blends, or chosen from among the unsaturated ethylene monomers with a dicarboxylic function such as crotonic, isocrotonic, cinnamic, itaconic, maleic acid, or again the anhydrides of carboxylic acids, such as maleic anhydride, or chosen from among the unsaturated ethylene monomers with a sulphonic function such as acrylamido- methyl-propane- sulphonic acid, sodium methallylsulphonate, vinyl sulphonic acid and styrene sulphonic acid, or again chosen from among the unsaturated ethylene monomers with a phosphoric function such as vinyl phosphoric acid, ethylene glycol methacrylate phosphate, propylene glycol methacrylate phosphate, ethylene glycol acrylate phosphate, or again chosen from among the unsaturated ethylene monomers with a phosphonic function such as vinyl phosphonic acid, or their blends,
b) of at least one unsaturated ethylene monomer of formula (I): 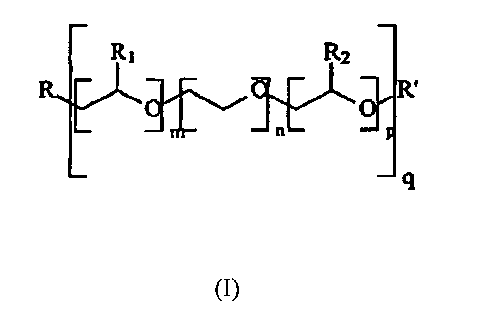 where:
- m and p represent a number of alkylene oxide units less than or equal to 125,
- n represents a number of ethylene oxide units of less than or equal to 125,
- q represents a whole number at least equal to 1 and such that 12 ≤ (m+n+p)q ≤ 450, and preferentially such that 25 ≤ (m+n+p)q < 140,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl-isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 22, and preferentially 8 to 18, carbon atoms, or an ionic or ionisable grouping such as a phosphate, a phosphonate, a sulphate, a sulphonate, a carboxylic, or indeed a primary, secondary or tertiary amine, or indeed their blends, and preferentially represents a hydrocarbonated radical having 1 to 12 carbon atoms, and very preferentially a hydrocarbonated radical having 1 to 4 carbon atoms,
or a blend of several monomers of formula (I).
c) possibly at least one monomer of the acrylamide or methacrylamide type or their derivatives such as N-[3-(dimethylamino) propyl] acrylamide or N-[3-(dimethylamino) propyl] methacrylamide, and their blends, or indeed at least one non-water-soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivatives.

11. A method according to one of the claims 1 to 9, **characterised in that** in step c) the said comb- type hydrophilic polymer(s) consist, expressed by weight:
a) of 1% to 15% and even more specifically of 2% to 10% of at least one anionic unsaturated ethylene monomer chosen from among the unsaturated ethylene monomers and with a monocarboxylic function such as acrylic or methacrylic acid, or again the diacid hemiesters such as the C₁ to C₄ monoesters of maleic or itaconic acids, or their blends, or chosen from among the unsaturated ethylene monomers with a dicarboxylic function such as crotonic, isocrotonic, cinnamic, itaconic, maleic acid, or again the anhydrides of carboxylic acids, such as maleic anhydride, or chosen from among the unsaturated ethylene monomers with a sulphonic function such as acrylamido-methyl-propane- sulphonic acid, sodium methallylsulphonate, vinyl sulphonic acid and styrene sulphonic acid, or again chosen from among the unsaturated ethylene monomers with a phosphoric function such as vinyl phosphoric acid, ethylene glycol methacrylate phosphate, propylene glycol methacrylate phosphate, ethylene glycol acrylate phosphate, or again chosen from among the unsaturated ethylene monomers with a phosphonic function such as vinyl phosphonic acid, or their blends,
b) 80% to 99%, and even more particularly 90% to 98%, of at least one unsaturated ethylene monomer of formula (I): 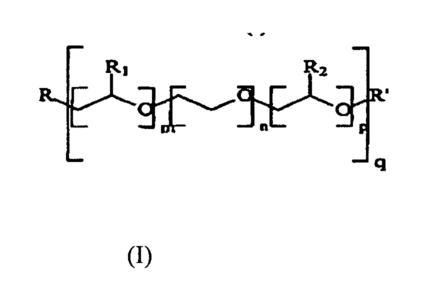 where:
- m and p represent a number of alkylene oxide units less than or equal to 125,
- n represents a number of ethylene oxide units of less than or equal to 125,
- q represents a whole number at least equal to 1 and such that 12 ≤ (m+n+p)q ≤ 450, and preferentially such that 25 ≤ (m+n+p)q < 140,
- R₁ represents hydrogen or the methyl or ethyl radical,
- R₂ represents hydrogen or the methyl or ethyl radical,
- R represents a radical containing an unsaturated polymerisable function, preferentially belonging to the group of vinylics, or to the group of acrylic, methacrylic, maleic, itaconic, crotonic, vinylphthalic esters, or to the group of unsaturated urethanes such as acrylurethane, methacrylurethane, α-α' dimethyl- isopropenyl-benzylurethane, allylurethane, or to the group of allylic or vinylic ethers, whether or not substituted, or again to the group of ethylenically unsaturated amides or imides,
- R' represents hydrogen or a hydrocarbonated radical having 1 to 22, and preferentially 8 to 18, carbon atoms, or an ionic or ionisable grouping such as a phosphate, a phosphonate, a sulphate, a sulphonate, a carboxylic, or indeed a primary, secondary or tertiary amine, or indeed their blends, and preferentially represents a hydrocarbonated radical having 1 to 12 carbon atoms, and very preferentially a hydrocarbonated radical having 1 to 4 carbon atoms,
or a blend of several monomers of formula (I),
c) 0% to 50% of at least one monomer of the acrylamide or methacrylamide type or their derivatives such as N-[3-(dimethylamino) propyl] acrylamide or N-[3-(dimethylamino) propyl] methacrylamide, and their blends, or indeed at least one non-water- soluble monomer such as the alkyl acrylates or methacrylates, the unsaturated esters such as N-[2-(dimethylamino) ethyl] methacrylate, or N-[2-(dimethylamino) ethyl] acrylate, the vinylics such as vinyl acetate, vinylpyrrolidone, styrene, alphamethylstyrene and their derivatives,
where the total proportions of the constituents a), b) and c) are equal to 100%.

12. A method according to one of the claims 9 to 11, **characterised in that** when the ethylenically unsaturated anionic monomer(s) are ethylenically unsaturated anionic monomers with a monocarboxylic or dicarboxylic function and R₁, R₂ and R' represent hydrogen in the unsaturated ethylene monomer(s) of formula (I), the molar ratio of the unsaturated ethylene monomer(s) of formula (I) relative to the ethylenically unsaturated anionic monomers with a monocarboxylic or dicarboxylic function in the comb-type hydrophilic polymer(s) is 2:3 to 1:2 in the case in which (m + n + p)q is 50 to 100, 1:2 to 1:4 in the case in which (m + n + p)q is 25 to 50, and 1:4 to 1:10 in the case in which (m + n + p)q is 12 to 25.

13. A method according to one of the claims 9 to 12, **characterised in that** when the ethylenically unsaturated anionic monomer(s) are ethylenically unsaturated anionic monomers with a monocarboxylic or dicarboxylic function and the unsaturated ethylene monomer(s) of formula (I) are ethylene oxide methacrylate esters where (m + n + p)q is 40 to 130, the molar ratio of the unsaturated ethylene monomer(s) of formula (I) relative to the ethylenically unsaturated anionic monomers with a monocarboxylic or dicarboxylic function in the comb-type hydrophilic polymer(s) is 1:2.

14. A method according to one of the claims 1 to 13, **characterised in that** in step c), when the comb-type hydrophilic polymer(s) are in an acid form they are partially or totally neutralised by one or more neutralisation agents having a monovalent neutralising function or a polyvalent neutralising function such as, for example, for the monovalent function, those chosen from the group constituted by the alkaline cations, in particular sodium, potassium, lithium, ammonium or the primary, secondary or tertiary aliphatic and/or cyclic amines, such as, for example, stearylamine, the ethanolamines (mono-, di-, triethanolamine), mono- and diethylamine, cyclohexylamine, methylcyclohexylamine, amino methyl propanol, morpholine, or again, for the polyvalent function, those chosen from the group constituted by the alkaline earth divalent cations, in particular magnesium and calcium, or again zinc, and also by the trivalent cations, in particular aluminium, or again by certain cations of higher valency.

15. A method according to one of the claims 1 to 14, **characterised in that** in step c) the comb- type hydrophilic polymer(s) each have a weight-average molecular weight (Mw) of 1,800 to 100,000 g/mole, and preferentially 20,000 to 50,000 g/mole.

16. A method according to one of the claims 1 to 15, **characterised in that** in step c) the method uses 0.005 to 1.0% by dry weight, preferentially 0.03 to 0.5% by dry weight, of comb-type hydrophilic polymer, relative to the dry weight of the material crushed in each grinding unit.

17. A method according to one of the claims 1 to 16, **characterised in that** in step c) the quantity of the comb-type hydrophilic polymer(s) used in each grinding unit is between 0.1 and 1 mg of comb-type hydrophilic polymer per m² of recovered material, and preferentially between 0.2 and 0.6 mg of comb-type hydrophilic polymer per m² of recovered material.

18. A method according to one of the claims 1 to 17, **characterised in that** when the comb-type hydrophilic polymer(s) of step c) are subjected to a temperature of 45° C for a period of 16 hours, more than 75%, preferentially more than 90%, of 50 mg of the comb-type hydrophilic polymer(s) put into 50 ml of water are not volatilised.

19. A method according to one of the claims 1 to 18, **characterised in that** in step c) the comb- type hydrophilic polymer(s) are blended with agents which are not of the comb type.

20. A method according to claim 19, **characterised in that** the comb-type hydrophilic polymer(s) represent at least 50% by weight, preferentially at least 85% by weight, and very preferentially at least 95% by weight, of the total weight constituted by the comb-type hydrophilic polymer(s) and of the agents which are not of the comb type.

21. A method according to one of the claims 19 or 20, **characterised in that** the agent which is not of the comb type is a carbohydrate, a polyethylene glycol (PEG), tri isopropanol amine (TIPA), or their blends.

22. A method according to claim 21, **characterised in that** the said TIPA is used in combination with a comb-type hydrophilic polymer in a ratio TIPA: comb- type hydrophilic polymer equal to 20:80.

23. A method according to one of the claims 1 to 22, **characterised in that** in step c) the material of the said grinding unit contains at least 80%, and preferentially at least 90%, by weight of calcium carbonate relative to the weight of the said material in the said grinding unit.

24. A method according to one of the claims 1 to 23, **characterised in that** the calcium carbonate is a limestone, a marble, a chalk, a dolomite or their blends, and is preferentially a limestone, a marble or their blends.

25. A method according to one of the claims 1 to 24, **characterised in that** in step c) the non-calcium carbonate part of the material in the said grinding unit consists of a clay, a non- clayey silicate, or their blends.

26. A method according to one of the claims 1 to 25, **characterised in that** step c) takes place in at least one ball mill comprising grinding beads.

27. A method according to claim 26, **characterised in that** the grinding beads have an aspect ratio of between 1/3 and 3/1.

28. A method according to one of the claims 1 to 27, **characterised in that** step d) takes place.

29. A method according to claim 28, **characterised in that** at least 2 classification steps take place before any subsequent step c), where one or other of these 2 steps can take place in series or in parallel.

30. A method according to one of the claims 28 or 29, **characterised in that** a part of the material resulting from the classification step d) is recirculated back to step c) for additional grinding.

31. A method according to one of the claims 28 to 30, **characterised in that** the recovered material resulting from step d) has a d₅₀ (average diameter) of between 0.7 and 150 microns, preferentially of between 1 and 45 microns, and more preferentially of between 1.2 and 5 microns.

32. A method according to claim 31, **characterised in that** a fresh quantity of crushed material equal to the quantity of recovered material resulting from step d) is added in step c).

33. A method for grinding in a wet medium **characterised in that** the material ground according to step c) of the method according to one of the claims 1 to 32 is ground in a wet medium, where the said grinding may take place, possibly, in the presence of dispersant agents, in order to obtain a ground product with a d₅₀ (average diameter) of 0.4 to 1.0 microns, and preferentially in order to obtain a ground product with a d₅₀ (average diameter) of 0.6 to 0.9 microns.

## Patentansprüche

1. Trockenmahlverfahren für einen oder mehrere, aus mindestens einem Calciumcarbonat bestehende(n) Mineralstoffe, das **dadurch gekennzeichnet ist, dass** das besagte Verfahren folgende Schritte umfasst:
a) Zerkleinerung des bzw. der Mineralstoffe in mindestens einer Zerkleinerungseinheit, bis ein zerkleinertes Material mit einem d₉₅ unter 10 cm vorliegt,
b) gegebenenfalls Veredlung des gesamten zerkleinerten Materials aus Schritt a) oder eines Teils davon,
c) trockenes Vermahlen des zerkleinerten Materials aus Schritt a) und / oder b) in mindestens einer Mahleinheit:
(i)in Gegenwart von mindestens einem hydrophilen Kamm-Polymer, das mindestens eine Polyalkenoxidfunktion angesetzt an mindestens ein ethylenisch ungesättigtes Monomer enthält,
(ii)in einer Weise, dass der Flüssigkeitsanteil in der besagten Mahleinheit weniger als 15 % des Trockengewichts des besagten zerkleinerten Materials in der besagten Mahleinheit ausmacht,
d) gegebenenfalls Teilchenklassierung für das gemäß Schritt c) trocken vermahlenen Material mit mindestens einer Klassiereinheit,
e) gegebenenfalls Wiederholung der Schritte c) und / oder d) für das gesamte trocken vermahlene Material aus Schritt c) und / oder d) oder für einen Teil davon,
und **dadurch gekennzeichnet ist, dass** das aus Schritt c) und / oder d) und / oder e) gewonnene Material einen mittleren Durchmesser d₅₀ von 0,5 ä 500 µm aufweist.

2. Verfahren nach Anspruch 1, **dadurch gekennzeichnet, dass** in Schritt c) das bzw. die ethylenisch ungesättigte(n) Monomer(e) mit mindestens einer angesetzten Polyalkenoxidfunktion jeweils ein Molekulargewicht (Mw) zwischen 500 und 20 000 g/mol aufweisen.

3. Verfahren nach einem der Ansprüche 1 oder 2, **dadurch gekennzeichnet, dass** in Schritt c) das bzw. die ethylenisch ungesättigte(n) Polymer(e) nicht ionische und / oder anionische Polymere sind.

4. Verfahren nach einem der Ansprüche 1 bis 3, **dadurch gekennzeichnet, dass** in Schritt c) nur eine Polyalkenoxidfunktion an das besagte und / oder die besagten ethylenisch ungesättigte(n) Monomer(e) angesetzt ist.

5. Verfahren nach einem der Ansprüche 1 bis 4, **dadurch gekennzeichnet**, das in Schritt c) mindestens eines der ethylenisch ungesättigten Monomere, an das mindestens eine Polyalkenoxidfunktion angesetzt ist, ein Monomer mit folgender Formel (I) ist: 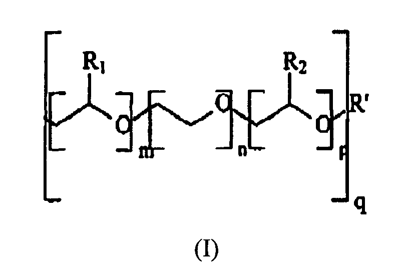 Darin:
- m und p stellen eine Anzahl Alkylenoxidmuster kleiner oder gleich 125 dar,
- n stellt eine Anzahl Ethylenoxidmuster kleiner oder gleich 125 dar,
- q stellt eine ganze Zahl, aber mindestens 1 dar, wie 12 ≤ (m+n+p)q ≤ 450 und vorzugsweise wie 25 ≤ (m+n+p)q ≤ 140,
- R₁ stellt Wasserstoff oder das Methyl- bzw. Ethylradikal dar,
- R₂ stellt Wasserstoff oder das Methyl- bzw. Ethylradikal dar,
- R stellt ein Radikal mit einer polymerisierbaren, ungesättigten Funktion dar, das vorzugsweise zur Gruppe der Vinyle und zur Gruppe der Acryl-, Methacryl-, Malein-, Itacon-, Croton-, Vinylphtal-Ester und zur Gruppe der ungesättigten Urethane, wie Acrylurethan, Methacrylurethan, α-α'-Dimethyl-Isopropenyl-Benzylurethan, Allylurethan, genauso wie zur Gruppe der substituierten oder nicht substituierten Allyl- oder Vinylether oder auch zur Gruppe der ethylenisch ungesättigten Amide oder Imide gehört,
- R' stellt Wasserstoff oder ein hydrocarbonisiertes Radikal mit 1 bis 22 und vorzugsweise 8 bis 18 Kohlenstoffatomen oder eine ionische bzw. ionisierbare Gruppe dar, wie ein Phosphat, ein Phosphonat, ein Sulfat, ein Sulfonat, ein Carboxyl oder auch ein primäres, sekundäres oder terziäres Amin oder auch die Mischungen daraus.

6. Verfahren nach Anspruch 5, **dadurch gekennzeichnet, dass** das Radikal R' ein lineares oder verzweigtes hydrocarbonisiertes Radikal darstellt.

7. Verfahren nach Anspruch 6, **dadurch gekennzeichnet, dass** das Radikal R' das Radikal Hexyl-1-Dekanyl darstellt.

8. Verfahren nach einem der Ansprüche 1 bis 5, **dadurch gekennzeichnet, dass** in Schritt c) mindestens drei der besagten ethylenisch ungesättigten Monomere, an die mindestens eine Polyalkenoxidfunktion angesetzt ist, Monomere mit folgender Formel (I) sind: 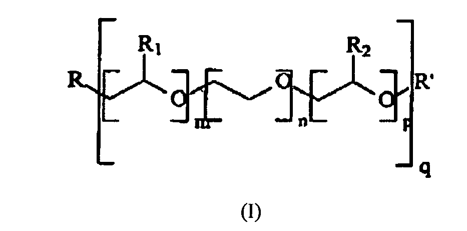 Darin:
- m und p stellen eine Anzahl Alkylenoxidmuster kleiner oder gleich 125 dar,
- n stellt eine Anzahl Ethylenoxidmuster kleiner oder gleich 125 dar,
- q stellt eine ganze Zahl, aber mindestens 1 dar, wie 12 ≤ (m+n+p)q ≤ 450 und vorzugsweise wie 25 ≤ (m+n+p)q ≤ 140,
- R₁ stellt Wasserstoff oder das Methyl- bzw. Ethylradikal dar,
- R₂ stellt Wasserstoff oder das Methyl- bzw. Ethylradikal dar,
- R stellt ein Radikal mit einer polymerisierbaren, ungesättigten Funktion dar, das vorzugsweise zur Gruppe der Vinyle und zur Gruppe der Acryl-, Methacryl-, Malein-, Itacon-, Croton-, Vinylphtal-Ester und zur Gruppe der ungesättigten Urethane, wie Acrylurethan, Methacrylurethan, α-α'-Dimethyl-Isopropenyl-Benzylurethan, Allylurethan, genauso wie zur Gruppe der substituierten oder nicht substituierten Allyl- oder Vinylether oder auch zur Gruppe der ethylenisch ungesättigten Amide oder Imide gehört,
- R' stellt Wasserstoff oder ein hydrocarbonisiertes Radikal mit 1 bis 22 und vorzugsweise 8 bis 18 Kohlenstoffatomen oder eine ionische bzw. ionisierbare Gruppe dar, wie ein Phosphat, ein Phosphonat, ein Sulfat, ein Sulfonat, ein Carboxyl oder auch ein primäres, sekundäres oder terziäres Amin oder auch die Mischungen daraus.

9. Verfahren nach einem der Ansprüche 1 bis 8, **dadurch gekennzeichnet, dass** in Schritt c) das bzw. die hydrophile(n) Kamm-Polymer(e) aus folgendem bestehen:
a) aus mindestens einem anionischen, ethylenisch ungesättigten Monomer mit Monocarboxyl- oder Dicarboxyl- oder Phosphor- oder Phosphon- oder Sulfonfunktion oder Mischungen daraus,
b) aus mindestens einem Monomer der Formel (I): 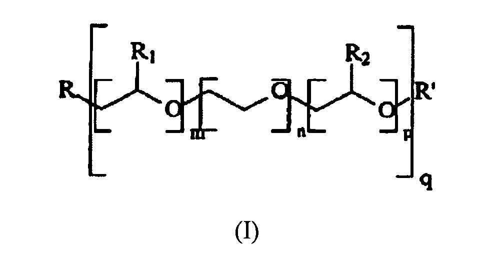 Darin:
- m und p stellen eine Anzahl Alkylenoxidmuster kleiner oder gleich 125 dar,
- n stellt eine Anzahl Ethylenoxidmuster kleiner oder gleich 125 dar,
- q stellt eine ganze Zahl, aber mindestens 1 dar, wie 12 ≤ (m+n+p)q ≤ 450 und vorzugsweise wie 25 ≤ (m+n+p)q ≤ 140,
- R₁ stellt Wasserstoff oder das Methyl- bzw. Ethylradikal dar,
- R₂ stellt Wasserstoff oder das Methyl- bzw. Ethylradikal dar,
- R stellt ein Radikal mit einer polymerisierbaren, ungesättigten Funktion dar, das vorzugsweise zur Gruppe der Vinyle und zur Gruppe der Acryl-, Methacryl-, Malein-, Itacon-, Croton-, Vinylphtal-Ester und zur Gruppe der ungesättigten Urethane, wie Acrylurethan, Methacrylurethan, α-α'-Dimethyl-Isopropenyl-Benzylurethan, Allylurethan, genauso wie zur Gruppe der substituierten oder nicht substituierten Allyl- oder Vinylether oder auch zur Gruppe der ethylenisch ungesättigten Amide oder Imide gehört,
- R' stellt Wasserstoff oder ein hydrocarbonisiertes Radikal mit 1 bis 22 und vorzugsweise 8 bis 18 Kohlenstoffatomen oder eine ionische bzw. ionisierbare Gruppe dar, wie ein Phosphat, ein Phosphonat, ein Sulfat, ein Sulfonat, ein Carboxyl oder auch ein primäres, sekundäres oder terziäres Amin oder auch Mischungen daraus, und vorzugsweise ein hydrocarbonisiertes Radikal mit 1 bis 12 Kohlenstoffatomen und am besten ein hydrocarbonisiertes Radikal mit 1 bis 4 Kohlenstoffatomen,
oder aus einer Mischung aus mehreren Monomeren der Formel (I),
c) gegebenenfalls aus mindestens einem Acrylamid- oder Methacrylamid-Monomer oder deren Derivaten wie N-[3-(dimethylamino)propyl]-Acrylamid oder N-[3-(dimethylamino)propyl]-Methacrylamid und Mischungen daraus oder aber aus mindestens einem nicht wasserlöslichen Monomer wie Alkylacrylaten oder -methacrylaten, ungesättigten Estern wie N-[2-(dimethylamino)-ethyl]-Methacrylat oder N-[2-(dimethylamino)-ethyl]-Acrylat, Vinylen wie Vinylacetat, Vinylpyrrolidon, Styrol, Alphamethylstyrol und ihre Derivaten.

10. Verfahren nach einem der Ansprüche 1 bis 9, **dadurch gekennzeichnet, dass** in Schritt c) das bzw. die hydrophile(n) Kamm-Polymer(e) aus folgendem bestehen:
a) aus mindestens einem ethylenisch ungesättigten, anionischen Monomer aus der Gruppe der ethylenisch ungesättigten Monomere mit Monocarboxylfunktion, wie der Acryl- oder Methacrylsäure oder auch Diacid-Halbestern wie den Monoestem bei C₁ bis C₄ der Malein- oder Itaconsäure oder Mischungen daraus, oder aus der Gruppe der ethylenisch ungesättigten Monomere mit Dicarboxylfunktion wie der Croton-, Isocroton-, Cinnamin-, Itacon-, Maleinsäure oder auch den Carboxyl-Säureanhydriden wie dem Maleinanhydrid, oder aus der Gruppe der ethylenisch ungesättigten Monomere mit Sulfonfunktion wie der Acrylamido-Methyl-Propan-Sulfonsäure, Natrium-Methallylsulfonat, der Vinylsulfon- und Styrolsulfonsäure, oder auch aus der Gruppe der ethylenisch ungesättigten Monomere mit Phosphorfunktion wie der Vinylphosporsäure, Ethylenglykol-Methacrylat-Phosphat, Propylenglykol-Methacrylat-Phosphat, Ethylenglykol-Acrylat-Phosphat oder aber aus der Gruppe der ethylenisch ungesättigten Monomere mit Phosphonfunktion wie der Vinylphosphonsäure oder Mischungen daraus,
b) aus mindestens einem ethylenisch ungesättigten Monomer der Formel (I): 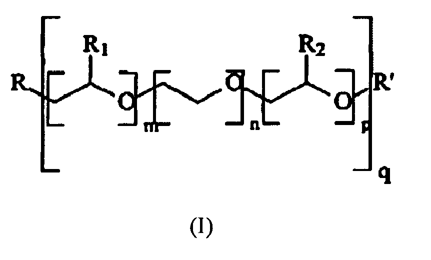 Darin:
- m und p stellen eine Anzahl Alkylenoxidmuster kleiner oder gleich 125 dar,
- n stellt eine Anzahl Ethylenoxidmuster kleiner oder gleich 125 dar,
- q stellt eine ganze Zahl, aber mindestens 1 dar, wie 12 ≤ (m+n+p)q ≤ 450 und vorzugsweise wie 25 ≤ (m+n+p)q ≤ 140,
- R₁ stellt Wasserstoff oder das Methyl- bzw. Ethylradikal dar,
- R₂ stellt Wasserstoff oder das Methyl- bzw. Ethylradikal dar,
- R stellt ein Radikal mit einer polymerisierbaren, ungesättigten Funktion dar, das vorzugsweise zur Gruppe der Vinyle und zur Gruppe der Acryl-, Methacryl-, Malein-, Itacon-, Croton-, Vinylphtal-Ester und zur Gruppe der ungesättigten Urethane, wie Acrylurethan, Methacrylurethan, α-α'-Dimethyl-Isopropenyl-Benzylurethan, Allylurethan, genauso wie zur Gruppe der substituierten oder nicht substituierten Allyl- oder Vinylether oder auch zur Gruppe der ethylenisch ungesättigten Amide oder Imide gehört,
- R' stellt Wasserstoff oder ein hydrocarbonisiertes Radikal mit 1 bis 22 und vorzugsweise 8 bis 18 Kohlenstoffatomen oder eine ionische bzw. ionisierbare Gruppe dar, wie ein Phosphat, ein Phosphonat, ein Sulfat, ein Sulfonat, ein Carboxyl oder auch ein primäres, sekundäres oder terziäres Amin oder auch Mischungen daraus, und vorzugsweise ein hydrocarbonisiertes Radikal mit 1 bis 12 Kohlenstoffatomen und am besten ein hydrocarbonisiertes Radikal mit 1 bis 4 Kohlenstoffatomen,
oder aus der Mischung aus mehreren Monomeren der Formel (I),
c) gegebenenfalls aus mindestens einem Acrylamid- oder Methacrylamid-Monomer oder deren Derivaten wie N-[3-(dimethylamino)propyl]-Acrylamid oder N-[3-(dimethylamino)propyl]-Methacrylamid und Mischungen daraus oder aber aus mindestens einem nicht wasserlöslichen Monomer wie Alkylacrylaten oder -methacrylaten, ungesättigten Estern wie N-[2-(dimethylamino)-ethyl]-Methacrylat oder N-[2-(dimethylamino)-ethyl]-Acrylat, Vinylen wie Vinylacetat, Vinylpyrrolidon, Styrol, Alphamethylstyrol und ihren Derivaten.

11. Verfahren nach einem der Ansprüche 1 bis 9, **dadurch gekennzeichnet, dass** in Schritt c) das bzw. die hydrophile(n) Kamm-Polymer(e), ausgedrückt in Gewicht, aus folgendem bestehen:
a) zu 1 % bis 15 % und genauer zu 2 % bis 10 % aus mindestens einem ethylenisch ungesättigten, anionischen Monomer aus der Gruppe der ethylenisch ungesättigten Monomere mit Monocarboxylfunktion, wie der Acryl- oder Methacrylsäure oder auch Diacid-Halbestern wie den Monoestern bei C₁ bis C₄ der Malein- oder Itaconsäure oder Mischungen daraus, oder aus der Gruppe der ethylenisch ungesättigten Monomere mit Dicarboxylfunktion wie der Croton-, Isocroton-, Cinnamin-, Itacon-, Maleinsäure oder auch den Carboxyl-Säureanhydriden wie dem Maleinanhydrid, oder aus der Gruppe der ethylenisch ungesättigten Monomere mit Sulfonfunktion wie der Acrylamido-Methyl-Propan-Sulfonsäure, Natrium-Methallylsulfonat, der Vinylsulfon- und Styrolsulfonsäure oder auch aus der Gruppe der ethylenisch ungesättigten Monomere mit Phosphorfunktion wie Vinylphosporsäure, Ethylenglykol-Methacrylat-Phosphat, Propylenglykol-Methacrylat-Phosphat, Ethylenglykol-Acrylat-Phosphat oder aber aus der Gruppe der ethylenisch ungesättigten Monomere mit Phosphonfunktion wie der Vinylphosphonsäure oder Mischungen daraus,
b) zu 80 % bis 99 % und genauer zu 90 % bis 98 % aus mindestens einem ethylenisch ungesättigten Monomer der Formel (I): 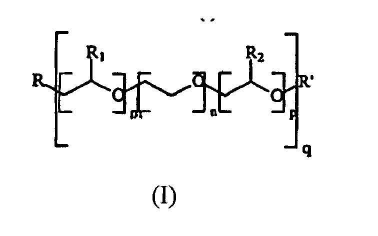 Darin:
- m und p stellen eine Anzahl Alkylenoxidmuster kleiner oder gleich 125 dar,
- n stellt eine Anzahl Ethylenoxidmuster kleiner oder gleich 125 dar,
- q stellt eine ganze Zahl, aber mindestens 1 dar, wie 12 ≤ (m+n+p)q ≤ 450 und vorzugsweise wie 25 ≤ (m+n+p)q ≤ 140,
- R₁ stellt Wasserstoff oder das Methyl- bzw. Ethylradikal dar,
- R₂ stellt Wasserstoff oder das Methyl- bzw. Ethylradikal dar,
- R stellt ein Radikal mit einer polymerisierbaren, ungesättigten Funktion dar, das vorzugsweise zur Gruppe der Vinyle und zur Gruppe der Acryl-, Methacryl-, Malein-, Itacon-, Croton-, Vinylphtal-Ester und zur Gruppe der ungesättigten Urethane, wie Acrylurethan, Methacrylurethan, α-α'-Dimethyl-Isopropenyl-Benzylurethan, Allylurethan, genauso wie zur Gruppe der substituierten oder nicht substituierten Allyl- oder Vinylether oder auch zur Gruppe der ethylenisch ungesättigten Amide oder Imide gehört,
- R' stellt Wasserstoff oder ein hydrocarbonisiertes Radikal mit 1 bis 22 und vorzugsweise 8 bis 18 Kohlenstoffatomen oder eine ionische bzw. ionisierbare Gruppe dar, wie ein Phosphat, ein Phosphonat, ein Sulfat, ein Sulfonat, ein Carboxyl oder auch ein primäres, sekundäres oder terziäres Amin oder auch Mischungen daraus, und vorzugsweise ein hydrocarbonisiertes Radikal mit 1 bis 12 und am besten ein hydrocarbonisiertes Radikal mit 1 bis 4 Kohlenstoffatomen,
oder aus einer Mischung aus mehreren Monomeren der Formel (I),
c) gegebenenfalls aus mindestens einem Acrylamid- oder Methacrylamid-Monomer oder deren Derivaten wie N-[3-(dimethylamino)propyl]-Acrylamid oder N-[3-(dimethylamino)propyl]-Methacrylamid und Mischungen daraus oder aber aus mindestens einem nicht wasserlöslichen Monomer wie Alkylacrylaten oder -methacrylaten, ungesättigten Estern wie N-[2-(dimethylamino)-ethyl]-Methacrylat oder N-[2-(dimethylamino)-ethyl]-Acrylat, Vinylen wie Vinylacetat, Vinylpyrrolidon, Styrol, Alphamethylstyrol und ihren Derivaten,
wobei die Anteile der Bestandteile a), b) und c) insgesamt 100 % ausmachen.

12. Verfahren nach einem der Ansprüche 9 bis 11, **dadurch gekennzeichnet, dass**, wenn das bzw. die anionische(n), ethylenisch ungesättigte(n) Monomer (e) anionische, ethylenisch ungesättigte Monomere mit Monocarboxyl- oder Dicarboxylfunktion sind und R₁, R₂ et R' den Wasserstoff in dem bzw. den ethylenisch ungesättigten Monomer(en) der Formel (I) darstellen, das Molarverhältnis in dem bzw. den ethylenisch ungesättigten Monomer(en) der Formel (I) bezogen auf die anionischen, ethylenisch ungesättigten Monomeren mit Monocarboxyl- oder Dicarboxylfunktion in dem bzw. den hydrophilem(n) Kamm-Polymer(en) zwischen 2:3 und 10:2 liegt, sofern (m + n + p)q 50 bis 100 ergibt, zwischen 1:2 und 1:4, wenn (m + n + p)q 25 bis 50 ergibt, und zwischen 1:4 und 1:10, wenn (m + n + p)q 12 bis 25 ergibt.

13. Verfahren nach einem der Ansprüche 9 bis 12, **dadurch gekennzeichnet, dass**, wenn das bzw. die anionische(n), ethylenisch ungesättigte(n) Monomer(e) anionische, ethylenisch ungesättigte Monomere mit Monocarboxyl- oder Dicarboxylfunktion sind und das bzw. die ethylenisch ungesättigte(n) Monomer (e) der Formel (I) Ethylenoxid-Methacrylatester sind, wo*** (m + n + p)q 40 bis 130 ergibt, das Molarverhältnis des bzw. der ethylenisch ungesättigte(n) Monomere(s) der Formel (I) bezogen auf die anionischen, ethylenisch ungesättigten Monomeren mit Monocarboxyl- oder Dicarboxylfunktion in dem bzw. den hydrophilem(n) Kamm-Polymer(en) bei 1:2 liegt.

14. Verfahren nach einem der Ansprüche 1 bis 13, **dadurch gekennzeichnet, dass** in Schritt c), wenn das bzw. die hydrophile(n) Polymer(e) in Säureform vorliegen, sie auch ganz oder teilweise durch ein oder mehrere Neutralisierungsmittel mit einer einwertigen neutralisierenden Funktion oder einer mehrwertigen neutralisierenden Funktion neutralisiert werden können, wofür z. B. die einwertige Funktion aus der Gruppe der Alkalikationen, wie insbesondere Natrium, Kalium, Lithium, Ammonium oder aliphatische und / oder zyklische primäre, sekundäre oder terziäre Amine wie z. B. Stearylamin, Ethanolamin (Mono-, Di-, Triethanolamin), Mono- und Diethylamin, Cyclohexylamin, Methylcyclohexylamin, Aminomethylpropanol, oder auch die mehrwertige Funktion von Stoffen aus der Gruppe mit bivalenten Alkali-Erde-Kationen in Frage kommen, wie insbesondere Magnesium und Calcium, oder auch Zink, ebenso wie die dreiwertigen Kationen wie insbesondere Aluminium, oder aber einzelne, noch höherwertige Kationen.

15. Verfahren nach einem der Ansprüche 1 bis 14, **dadurch gekennzeichnet, dass** in Schritt c) das bzw. die hydrophile(n) Kamm-Polymer(e) jeweils ein Molekulargewicht (Mw) von 1 800 bis 100 000 g/mol und vorzugsweise von 20 000 bis 50 000 g/mol aufweisen.

16. Verfahren nach einem der Ansprüche 1 bis 15, **dadurch gekennzeichnet, dass** das Verfahren in Schritt c) mit 0,005 bis 1,0 % Trockengewicht und vorzugsweise mit 0,03 bis 0,5 % Trockengewicht des hydrophilen Kamm-Polymers bezogen auf das Trockengewicht des zerkleinerten Materials in jeder Mahleinheit arbeitet.

17. Verfahren nach einem der Ansprüche 1 bis 16, **dadurch gekennzeichnet, dass** in Schritt c) die in jeder Mahleinheit verwendete Menge hydrophilen(r) Kamm-Polymers(en) zwischen 0,1 und 1 mg des hydrophilen Kamm-Polymers pro m² gewonnenen Materials und vorzugsweise zwischen 0,2 und 0,6 mg des hydrophilen Kamm-Polymers pro m² gewonnenen Materials liegt.

18. Verfahren nach einem der Ansprüche 1 bis 17, **dadurch gekennzeichnet, dass** bei 16-stündiger Erhitzung des bzw. der hydrophilen Kamm-Polymer(e) aus Schritt c) auf 45 °C mehr als 75 % und vorzugsweise mehr als 90 % der 50 mg des (der) in 50 ml Wasser aufgelösten hydrophilen Kamm-Polymers(e) sich nicht verflüchtigen.

19. Verfahren nach einem der Ansprüche 1 bis 18, **dadurch gekennzeichnet, dass** in Schritt c) das bzw. die hydrophile(n) Kamm-Polymer(e) mit Hilfsstoffen, die nicht vom Kammtyp sind, vermischt werden.

20. Verfahren nach Anspruch 19, **dadurch gekennzeichnet, dass** das bzw. die hydrophile(n) Kamm-Polymer(e) mindestens 50 Gew.- %, vorzugsweise mindestens 85 Gew.- % und am besten mindestens 95 Gew.- % vom Gesamtgewicht ausmachen, das dem bzw. den hydrophile(n) Kamm-Polymer(en) und den Hilfsstoffen, die nicht vom Kamm-Typ sind, entspricht.

21. Verfahren nach einem der Ansprüche 19 oder 20, **dadurch gekennzeichnet, dass** der Hilfsstoff, der nicht vom Kamm-Typ ist, ein Kohlehydrat, ein Polyethylenglykol (PEG), Tri-isopropyl-Amin (TIPA) oder Mischungen daraus ist.

22. Verfahren nach Anspruch 21, **dadurch gekennzeichnet, dass** das besagte TIPA-Material in Verbindung mit einem hydrophilen Kamm-Polymer in einem Verhältnis von TIPA zu hydrophilem Kamm-Polymer von 20 : 80 vorteilhaft verwendet werden kann.

23. Verfahren nach einem der Ansprüche 1 bis 22, **dadurch gekennzeichnet, dass** in Schritt c) das Material in der besagten Mahleinheit mindestens 80 Gew.-%, vorzugsweise mindestens 90 Gew.-% Calciumcarbonat bezogen auf das Gewicht des besagten Materials in der besagten Mahleinheit enthält.

24. Verfahren nach einem der Ansprüche 1 bis 23, **dadurch gekennzeichnet, dass** es sich beim Calciumcarbonat um Kalkstein, Marmor, Kreide, Dolomit oder deren Gemische, vorzugsweise aber um Kalkstein, Marmor oder deren Gemische handelt.

25. Verfahren nach einem der Ansprüche 1 bis 24, **dadurch gekennzeichnet, dass** in Schritt c) der Nicht-Calciumcarbonat-Anteil des Materials in der besagten Mahleinheit aus einer Tonsorte, einem nicht tonhaltigem Silikat, einer Kieselerde oder deren Mischungen besteht.

26. Verfahren nach einem der Ansprüche 1 bis 25, **dadurch gekennzeichnet, dass** der Schritt c) mindestens in einer Kugelmühle mit Mahlkugeln stattfindet.

27. Verfahren nach Anspruch 26, **dadurch gekennzeichnet**, das die Mahlkugeln ein Seitenverhältnis zwischen 1 : 3 und 3 : 1 aufweisen.

28. Verfahren nach einem der Ansprüche 1 bis 27, **dadurch gekennzeichnet, dass** der Schritt d) stattfindet.

29. Verfahren nach Anspruch 28, **dadurch gekennzeichnet, dass** mindestens 2 Klassierungsschritte vor jedem weiteren Schritt c) stattfinden, wobei jeweils einer dieser zwei Schritte im Anschluss daran oder parallel dazu erfolgen kann.

30. Verfahren nach einem der Ansprüche 28 oder 29, **dadurch gekennzeichnet, dass** man einen Teil des aus dem Klassierungsschritt d) hervorgehenden Materials erneut Schritt c) für ein zusätzliches Mahlen durchlaufen lässt.

31. Verfahren nach einem der Ansprüche 28 bis 20, **dadurch gekennzeichnet, dass** das in Schritt d) gewonnene Material einen mittleren Durchmesser d₅₀ zwischen 0,7 und 150 µm, vorzugsweise zwischen 1 und 45 µm und am besten zwischen 1,2 und 5 µm aufweist.

32. Verfahren nach Anspruch 31, **dadurch gekennzeichnet, dass** genauso viel frisches zerkleinertes Material, wie in Schritt d) gewonnen wird, in Schritt c) wieder zugeführt wird.

33. Nassmahlverfahren **dadurch gekennzeichnet, dass** das aus Schritt c) des erfindungsgemäßen Verfahrens hervorgegangene Mahlgut nach einem der Ansprüche 1 bis 32 in einem Nassmahlverfahren vermahlen wird, wobei besagtes Nassmahlverfahren in Gegenwart von Dispergiermitteln stattfinden kann, um ein Mahlgut mit einem mittleren Durchmesser d₅₀ von 0,4 bis 1,0 µm und vorzugweise mit einem mittleren Durchmesser d₅₀ von 0,6 bis 0,9 µm zu erhalten.
